(19) Europäisches Patentamt / European Patent Office / Office européen des brevets

(11) **EP 2 868 949 A1**

(12) **EUROPÄISCHE PATENTANMELDUNG**

(43) Veröffentlichungstag:
06.05.2015 Patentblatt 2015/19

(51) Int Cl.:
*F16H 61/4096* (2010.01)  *F03B 13/14* (2006.01)
*F16H 61/44* (2006.01)

(21) Anmeldenummer: 14003152.7

(22) Anmeldetag: 11.09.2014

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **11.09.2013 DE 102013015165**

(71) Anmelder: **NEMOS GmbH**
**47057 Duisburg (DE)**

(72) Erfinder:
• **Vilsmeier, Roland**
**45478 Mühlheim an der Ruhr (DE)**
• **Runkel, Thomas**
**47800 Krefeld (DE)**
• **Peckolt, Jan**
**47058 Duisburg (DE)**

(74) Vertreter: **Tanner, Lukas et al**
**Pütrichstraße 5**
**81667 München (DE)**

(54) **Hydraulischer Abtriebsstrang und Hydrauliksteuerung sowie Verfahren jeweils zur Energiekonversion**

(57)     Die Erfindung betrifft einen hydraulischen Abtriebsstrang (50) bzw. eine Abtriebsanlage (100) und eine Hydrauliksteuerungsvorrichtung (60) sowie ein Verfahren jeweils zur Energiekonversion, insbesondere zur Wellenenergiekonversion. Der hydraulische Abtriebsstrang (50) ist eingerichtet zur Konversion von mechanischer Energie in elektrische Energie und umfasst wenigstens eine primärseitige hydraulische Arbeitsmaschine (4, 4a) zur Wandlung der mechanischen Energie in hydraulische Energie, und wenigstens eine sekundärseitige hydraulische Arbeitsmaschine (10, 10a) zur Wandlung der hydraulischen Energie in mechanische Nutzenergie; wobei der Abtriebsstrang (50) eingerichtet ist, bei einem Druckübergang zwischen wenigstens zwei Druckniveaus hydraulische Energie zu nutzen, indem die sekundärseitige Arbeitsmaschine (10, 10a) zur Aufnahme von beim Druckübergang, insbesondere bei einem Drucktransitions-Teilhub, frei werdender hydraulischer Energie im Abtriebsstrang (50) verkuppelt ist, insbesondere in Serie mit der primärseitigen Arbeitsmaschine. Hierdurch kann auf einfache Weise eine Energie bzw. ein energetischer Anteil genutzt werden, welcher ansonsten durch eine Drossel dissipiert würde. Die Verwendung der Arbeitsmaschine (10, 10a) zum Ernten der frei werdenden hydraulischen Energie hat sich insbesondere in Hinblick auf eine vergleichsweise kurze, häufige oszillierende induzierte Bewegung als zweckdienlich erwiesen.

Fig. 6

EP 2 868 949 A1

**EP 2 868 949 A1**

## Beschreibung

Die Erfindung betrifft einen hydraulischen Abtriebsstrang bzw. eine Abtriebsanlage und eine Hydrauliksteuerungsvorrichtung sowie ein Verfahren jeweils zur Energiekonversion, insbesondere Wellenenergiekonversion. Der hydraulische Abtriebsstrang ist eingerichtet zur Konversion von mechanischer Energie in elektrische Energie und umfasst wenigstens eine primärseitige hydraulische Arbeitsmaschine zur Wandlung der mechanischen Energie in hydraulische Energie, und wenigstens eine sekundärseitige hydraulische Arbeitsmaschine zur Wandlung der hydraulischen Energie in mechanische Nutzenergie. Die Erfindung betrifft insbesondere einen hydraulischen Abtriebsstrang gemäß einzelnen Merkmalen des Patentanspruchs 1 und eine Abtriebsanlage, eine Steuerungsvorrichtung sowie ein Verfahren jeweils gemäß dem entsprechenden unabhängigen Patentanspruch.

Bei Wellenenergiekonvertern ist es von Bedeutung, einen möglichst großen Energieertrag sicherstellen zu können. Investitionskosten sind üblicherweise hoch, und viele Projekte lassen sich nur dann realisieren, wenn eine möglichst gute Energiebilanz vorgewiesen werden kann.

Die vorliegende Erfindung betrifft insbesondere hydraulische Systeme, bei welchen Energie mittels eines aufgrund von externen Kräften entlang einer Bewegungsbahn bewegten Körpers geerntet werden kann, insbesondere indem durch eine geeignete Steuerung Einfluss auf die Bewegung des Körpers genommen wird. Insbesondere kann die Bewegungsbahn in Abhängigkeit einer auf den Körper ausgeübten Kraft vorgegeben werden. Der Körper übt dabei beispielsweise Zugkräfte auf eine Primärseite eines Abtriebsstrangs aus, wobei die übertragenen Zugkräfte aufgrund der externen (nicht beeinflussbaren) Kräfte stark schwanken können und bevorzugt auch durch das hydraulische System reaktiv verändert werden sollen.

Die vorliegende Erfindung betrifft insbesondere auch Wellenenergiekonverter mit wenigstens einem durch Seegang bzw. Meereswellen oder Dünung bewegten Schwimmkörper bzw. Auftriebskörper. Der Schwimmkörper kann mittels Zugmitteln in eine bestimmte Eintauchtiefe gebracht werden, insbesondere in Abhängigkeit von jeweils spezifischen Wellenbewegungen. Die Bewegung im Seegang kann als Rohertrag in Form von mechanischer Leistung bzw. Energie genutzt werden. Die mechanische Leistung wird dabei beispielsweise durch eine von außen (extern) hervorgerufene oszillierende Hin- und Her-Bewegung eines Schwimmkörpers bereitgestellt. Der Schwimmkörper kann dabei auch auf einer geschlossenen Kurvenbahn geführt werden, so dass die Bewegung des Schwimmkörpers als ein auf einen oszillierenden Arbeitshub abbildbare, reziproke Bewegungsbahn beschrieben werden kann. Durch eine geeignete Abtriebsanlage wird der Rohertrag in eine nutzbare, insbesondere speicherbare oder transportierbare Energieform gewandelt, typischerweise in elektrischen Strom.

Um hohe Netto-Leistungserträge der Gesamtanlage zu erzielen, sind gleichsam ein möglichst hoher Rohertrag und eine ebenso möglichst verlustarme Energiekonversion erforderlich. Aufgrund der hohen Kräfte bei relativ niedrigen Bewegungsgeschwindigkeiten und geringen Arbeitswegen bietet sich eine hydraulische Energiewandlung an. Es ist bekannt, dass durch kontinuierliches Einstellen oder Nachjustieren der Eintauchtiefe des Schwimmkörpers der Rohertrag maximiert werden kann. Daher besteht ein Bedarf an einem Abtriebsstrang, mittels welchem in Reaktion auf eine bestimmte (weitgehend undefinierte) von externen Kräften hervorgerufene Bewegung der Körper entlang einer bevorzugten Bewegungsbahn geführt werden kann, also auch mit einer optimalen Geschwindigkeit und/oder bei optimierten Zugkräften. Die Zugkräfte können dabei sowohl hinsichtlich maximaler Beträge als auch minimaler Beträge zu optimieren sein.

In vielen hydraulischen Anwendungen ändert sich die erforderliche Betätigungskraft längs eines Verfahrweges, d.h. längs eines Teilhubs. Als Beispiel sei ein Pendel genannt, das mittels einer rotatorischen Hydraulikmaschine aus einer nach unten hängenden Ruhelage in ein horizontal abstehende Lage ausgelenkt werden soll. Naturgemäß ist das hierfür erforderliche Drehmoment proportional zum Sinus des Auslenkwinkels. Soll diese Bewegung ausgeführt werden, und steht zunächst nur ein einziges Druckniveau, z.B. aus einer Versorgungsanlage, zur Verfügung, so muss der Druck dieses Druckniveaus hinreichend groß sein, um das maximal auftretende Moment (entsprechend einer horizontalen Auslenkung des Pendels) aufbringen zu können. Da bei kleineren Auslenkwinkeln jedoch ein niedrigeres Moment ausreichend ist, müsste in dieser Phase der Auslenkung der Druck mittels Drosselung verringert werden, was entsprechende Verluste zur Folge hat.

Bei Wellenenergiekonvertern, insbesondere bei Anlagen mit Schwimmkörpern, treten vergleichbare Prozesse auf. Um eine hohe Rohernte zu erzielen, soll der Schwimmkörper im Bereich der Wellentäler abgesenkt werden, um im jeweils anschließenden Wellenhub bei vergleichsweise großer Eintauchtiefe und entsprechend hoher Auftriebskraft eine hohe Hubarbeit erbringen zu können. Umgekehrt soll die Eintauchtiefe der/des Schwimmer(s) im Bereich der Wellenkämme verringert werden, so dass der/die Schwimmer in der anschließenden Wellensenkung (auf der Rückseite der Welle bis hin zum Wellental) wenig Bremsarbeit verrichtet. Sowohl die Vergrößerung der Eintauchtiefe im Wellental als auch die Verringerung der Eintauchtiefe im Bereich des jeweiligen Wellenkamms liefert insbesondere in Abhängigkeit der (vertikalen) Abmessungen des Schwimmkörpers Teilhübe, längs derer sich die Auftriebskraft und somit auch der erforderliche Druck in einer an- oder abtreibenden Hydraulikmaschine ändert. Würde in dieser Phase jeweils die größte erforderliche Druckdifferenz bereitgehalten, so könnte insbesondere aufgrund der zuvor beschriebenen Drosselverluste keine gute Energiebilanz sichergestellt werden.

Ein Konzept, die Energiebilanz zu verbessern, besteht darin, Drosselverluste durch eine Vielzahl unterschiedlicher Druckniveaus zu verringern, welche in der jeweiligen Phase eines Drucktransitions-Teilhubs ein jeweils näherungsweise angepasstes Druckniveau zur Verfügung stellen können, um dadurch die Effizienz bei der Konversion hydraulischer Energie zu erhöhen. Speziell in Bezug auf Wellenenergiekonverter wurde dieses Konzept näher von der Universität Aalborg in Dänemark untersucht. Ein entsprechender Fachbeitrag mit dem Titel "Analysis of Discrete Pressure Level Systems for Wave Energy Converters" der Autoren: R.H. Hansen, T.O. Andersen, H.C. Perdersen wurde in der Fachzeitschrift "Fluid Power and Mechatronics (FPM)", 2011 International Conference, IEEE, ISBN: 978-1-4244-8451-5 pp. 552-558 veröffentlicht. Hierbei wird jedoch eine hohe Kompexität der Anlage in Kauf genommen und es treten bedeutende Umschaltverluste auf.

Aufgabe ist, die Konversion von mechanischer Energie in elektrische Energie mittels eines hydraulischen Systems zu vereinfachen, insbesondere auf einfache Weise effizienter zu gestalten. Die Aufgabe der vorliegenden Erfindung kann auch darin gesehen werden, während einer durch Druckänderungen oder Kraftänderungen auf einen von externen Kräften bewegten Körper verursachten Bewegung bzw. bei durch Druckänderungen in einer hydraulischen Arbeitsmaschine verursachten Arbeitshüben generierte Energie möglichst effizient zu nutzen, wobei zu berücksichtigen ist, dass der Körper durch eine beliebige externe Kraft bewegt werden kann. Insbesondere besteht die Aufgabe auch darin, speziell bei auf nicht vordefinierte Weise durch Meereswellen bewegten Schwimmkörpern die Effizienz bzw. Ausbeute im hydraulischen Energie-Abschnitt zu steigern. Dabei soll vorteilhafterweise eine besonders gute Energiebilanz erzielbar sein, ohne die Komplexität des Gesamtsystems auf aufwändige Weise erhöhen zu müssen. Bevorzugt kann das hydraulische System auch auf einfache Weise für eine weitgehend beliebige Anzahl von Körpern ausgelegt werden. Nicht zuletzt kann die Aufgabe auch darin gesehen werden, eine Vorrichtung bereitzustellen, mittels welcher auf energieeffiziente, besonders einfache oder flexible Weise auf eine Anregung von außen reagiert werden kann, insbesondere in Hinblick auf eine von der Vorrichtung auf einen bewegten Körper ausgeübte veränderliche Reaktionskraft.

Diese Aufgabe wird durch einen hydraulischen Abtriebsstrang gemäß Anspruch 1 oder auch jeweils durch eine hydraulische Abtriebsanlage, eine Steuerungsvorrichtung, ein Steuerungsverfahren, ein Energiekonversionsverfahren oder eine entsprechende Verwendung einer hydraulischen Arbeitsmaschine jeweils gemäß dem entsprechenden unabhängigen Patentanspruch gelöst. Vorteilhafte Weiterbildungen der Erfindung werden in den jeweiligen Unteransprüchen erläutert. Dabei können die Merkmale der im Folgenden beschriebenen Ausführungsformen miteinander in Verbindung gebracht werden und zusammen verwirklicht sein, sofern dies nicht explizit verneint ist.

Insbesondere wird die Aufgabe gelöst durch einen hydraulischen Abtriebsstrang zur Konversion von mechanischer Energie, insbesondere von Wellenenergie von Meereswellen, in elektrische Energie, umfassend eine primärseitige hydraulische Arbeitsmaschine zur Wandlung der mechanischen Energie in hydraulische Energie, und eine sekundärseitige hydraulische Arbeitsmaschine zur Wandlung der hydraulischen Energie in mechanische Nutzenergie; wobei der Abtriebsstrang eingerichtet ist, einen Druckübergang zwischen wenigstens zwei Druckniveaus, insbesondere beim drosselfreien bzw. ohne Drosselung erfolgenden Schalten zwischen Druckniveaus, hydraulische Energie zu nutzen, wobei/indem die sekundärseitige Arbeitsmaschine zur Aufnahme von beim Druckübergang längs eines Teilhubs, insbesondere bei einem Drucktransitions-Teilhub, frei werdender hydraulischer Energie im Abtriebsstrang verkuppelt ist, insbesondere in Serie mit der primärseitigen Arbeitsmaschine. Hierdurch kann auf besonders elegante Weise hydraulische Energie genutzt werden, welche ansonsten bei Verwendung von Drosseln dissipiert würde und als Verlustenergie nicht auf der positiven Seite der Energiebilanz berücksichtigt werden könnte. Das Ernten von hydraulischer Energie bei durch Bewegung eines externen Körpers induzierten Druckänderungen oder bei Druckänderungen in einer Arbeitsmaschine ist insbesondere dann von Vorteil, wenn vergleichsweise kurze Arbeitshübe des Körpers ausgeführt werden und der Körper auf einer kurzen, oszillierenden Bewegungsbahn geführt wird, bei welcher das Ausmaß der Druckänderungen nicht exakt vorhersehbar ist. Es hat sich gezeigt, dass eine Druckrampe mittels des erfindungsgemäßen Einsatzes bzw. der erfindungsgemäßen Eingliederung der Arbeitsmaschine im Druckkreislauf nahezu verlustfrei oder zumindest sehr verlustarm abgefahren werden kann.

Mit anderen Worten: Mittels der sekundärseitigen Arbeitsmaschine kann ein Teildruckabfall genutzt werden, um Energie auszukoppeln, die anderenfalls dissipiert würde. Die primärseitige Arbeitsmaschine kann dabei z.B. von einem niedrigen auf ein hohes Druckniveau führen/pumpen. Die sekundärseitigen Arbeitsmaschine entspannt dabei bevorzugt von einem Hochdruckniveau auf ein mittleres Druckniveau, wobei eine Differenz zwischen dem mittleren Druckniveau und einem Niedrigdruckniveau zur Führung des Körpers genutzt werden kann, insbesondere für einen entgegen des Arbeitshubs gerichteten Rückzugshub. Das mittlere Druckniveau ist dabei jeweils in Abhängigkeit bestimmter Betriebsbedingungen einstellbar, insbesondere in Abhängigkeit der von extern angeregten Bewegung.

Insbesondere zur Konversion von mittels eines Schwimmkörpers aufgenommener Wellenenergie in reziproker Bewegungsbahn, die über ein geeignetes Getriebe zu einer oszillierenden Bewegung eines Betätigungselements, insbesondere eines Hydraulikzylinders oder einer hydraulischen Rotationsmaschine, führt, kann somit erreicht werden, dass eine Pumpleistung auf ein hohes Druckniveau erbracht wird und zugleich eine Rückzugsbewegung mit verminderter Kraft erfolgt. Die primäre Energieausbeute ergibt sich somit als Differenz der Pumparbeit in einem Arbeitshub, abzüglich der für den Rückzug aufzuwendenden Rückzugsarbeit.

Dabei hat sich gezeigt, dass sich mittels des erfindungsgemäßen Abtriebsstrangs insbesondere bei langsamen Druckübergängen längs eines Teilhubs eine effiziente Energiekonversion realisieren lässt, also weniger bei ruckartigen, schlagartigen Bewegungen, sondern eher bei kraftbetonten, kontinuierlichen Bewegungen, bei welchen der Druck während eines Teilhubs variabel ist und sich bedarfsgerecht einstellen kann. Der im Abtriebsstrang bzw. in einem Druckkreislauf einer entsprechenden Abtriebsanlage bereitstellbare Druck ist dabei abhängig von der von extern induzierten Bewegung des Körpers. Ein Hub einer primärseitigen Arbeitsmaschine ist eine Funktion der Bewegung des Körpers (Bewegungsabhängigkeit), jedoch ohne dass notwendigerweise eine vordefinierte Kraftabhängigkeit vorliegt.

Als Abtriebsstrang ist dabei bevorzugt ein System zu verstehen, welches eingerichtet ist, eine mechanische Energie erzeugende Komponente mit einem Generator zu verbinden und die mechanische Energie in hydraulische Energie und in eine weitere Energieform zu wandeln, insbesondere in mechanische Nutzenergie. Der Abtriebsstrang umfasst dabei mehrere Arbeitsmaschinen und kann mittels Zugmitteln an eine bewegten Körper gekuppelt sein. Der Abtriebsstrang kann direkt mit dem Generator verbunden sein. Der Abtriebsstrang kann den die Energie übertragenden Teil einer Abtriebsanlage bilden.

Als Primärseite ist dabei bevorzugt eine Seite zu verstehen, welche mit einem von extern bewegten Körper verbunden ist. Als Sekundärseite ist dabei bevorzugt eine Seite zu verstehen, welche mit dem Generator verbunden ist. Sowohl der Primärseite als auch der Sekundärseite können jeweils eigene Druckspeicher und Ventile zugeordnet sein.

Als Teilhub ist dabei bevorzugt ein Abschnitt einer Bewegung eines von extern bewegten Körpers oder auch ein Abschnitt eines Arbeitshubs einer hydraulischen Arbeitsmaschine zu verstehen. Der Teilhub kann sich sowohl auf eine Bewegung des Körpers, insbesondere Schwimmkörpers, als auch auf eine Bewegung eines beweglichen Elements der entsprechenden Arbeitsmaschine beziehen, beispielsweise eine translatorische Bewegung eines Kolbens oder eine Rotation einer Welle oder eine Rotation um eine Achse. Der Teilhub kann ein Abschnitt eines hydraulisch abgefahrenen Weges sein.

Ein Druckübergang bzw. eine Drucktransition kann dabei sowohl in Bezug auf eine vom Körper/Schwimmkörper ausgeübte Kraft als auch in Bezug auf die innerhalb der jeweiligen Arbeitsmaschine herrschenden Druckzustände zu verstehen sein. Insbesondere bei durch Meereswellen bewegten Schwimmkörpern ergeben sich Druckänderungen, welche insbesondere auch längs einer bestimmten Bewegungsrichtung auftreten können, also nicht nur in Umkehr- oder Totpunkten eines Bewegungspfades bzw. einer Trajektorie, und zwar auch mehr oder weniger unvorhersehbar.

Dabei hat sich gezeigt, dass bei vergleichsweise hohen Kräften und niedrigen Bewegungsgeschwindigkeiten ein besonders hoher Rohertrag genutzt werden kann, also eine gute Energieausbeute sichergestellt werden kann, und dass die mechanische Leistung durch eine hydraulische Energiewandlung besonders effizient bzw. effektiv geerntet werden kann.

Bevorzugt zeichnet sich der Abtriebsstrang durch eine paarweise feste Zuordnung jeweils einer primärseitigen und einer sekundärseitigen Arbeitsmaschine aus.

Bevorzugt sind eine oder mehrere primärseitige Arbeitsmaschinen mit einer oder mehreren sekundärseitigen Arbeitsmaschinen in gemeinsamer Anordnung gekoppelt, insbesondere über gemeinsame Druckspeicher des jeweiligen Druckniveaus.

Gemäß einem Ausführungsbeispiel ist die primärseitige Arbeitsmaschine zur Aufnahme einer insbesondere längs eines jeweiligen Drucktransitions-Teilhubs variablen Druckbelastung eingerichtet. Die sekundärseitige Arbeitsmaschine ist dabei bevorzugt zum Auskoppeln einer jeweiligen verbleibende Druckdifferenz als mechanische Nutzenergie eingerichtet. Hierdurch kann die geerntete Energie auch in Hinblick auf eine aufgezwungene Bewegung des Körpers/Schwimmkörpers auf einfache Weise verteilt werden. Beispielsweise wird nur derjenige Energieanteil an den Generator ausgekoppelt, welcher nicht zum aktiven Führen des Körpers benötigt wird, beispielsweise beim Rückholen des Körpers auf einer Rückseite einer Meereswelle.

Beschrieben sind im Folgenden der hydraulische Abtriebsstrang bzw. eine hydraulische Abtriebsanlage, mittels welchem/welcher ein Steuerungskonzept verlustarm umgesetzt werden kann. Im Anschluss daran wird eine Steuerungsstrategie zur Optimierung des Rohertrags beschrieben.

Die Erfindung beruht auf dem Konzept, einen hydraulischen Abtriebsstrang mit wenigstens einer primärseitigen und wenigstens einer sekundärseitigen Abtriebseinheit bereitzustellen.

Im Folgenden wird eine erfindungsgemäße hydraulische Abtriebsanlage umfassend wenigstens einen hydraulischen Abtriebsstrang näher beschrieben.

Eine erfindungsgemäße hydraulische Abtriebsanlage besteht bevorzugt aus folgenden Komponenten, die jeweils entsprechende Leistungswandlungen durchführen, wobei in Klammern die Art der Leistung angegeben ist:

Vom Seegang/Meereswellen (hydromechanisch) erfolgt eine Leistungsübertragung auf den/die Schwimmkörper (mechanisch). Von dem/den Schwimmkörper(n) erfolgt eine Leistungsübertragung auf den/die Pumpe/Motor (hydraulisch). Zwischen der Pumpe bzw. dem Motor und einem Speicher (hydraulisch/pneumatisch/hydraulisch) kann in beiden Richtungen eine Übertragung erfolgen. Vom Speicher erfolgt eine Übertragung auf einen Motor (mechanisch).

Vom Motor erfolgt eine Übertragung auf einen Generator (elektrisch). Vom Generator erfolgt optional eine Übertragung auf einen Wechselrichter, Trafo (elektrisch). Diese Prozesskette ist zweckdienlich, um die bei Wellenkraftwerken im Allgemeinen langsame und stochastische Bewegung des Seegangs auf effektive bzw. effiziente Weise in eine nutzbare Energieform zu wandeln. Der Energieübergang von Seegang zu Schwimmkörper bzw. der entsprechende (nutzbare) Energiebetrag entspricht hierbei der zuvor genannten Rohernte.

Als Beispiele für einen hydraulischen Speicher können druckgas- oder federbelastete Membran- bzw. Kolbenspeicher genannt werden, wobei eine Speicherung in einem komprimierten Gasvolumens eines pneumatischen Speichers erfolgen kann.

Im Folgenden wird die an die Schwimmkörper gekoppelte Pump-/Motoreinheit als primärseitige hydraulische Arbeitsmaschine bezeichnet, und die an den Generator gekoppelte Komponente als eine sekundärseitige hydraulische Arbeitsmaschine. Weitere unmittelbar zugehörige hydraulische Komponenten werden der jeweiligen primärseitigen oder sekundärseitigen Abtriebseinheit zugeordnet.

Gemäß einem bevorzugten Ausführungsbeispiel ist der Abtriebsstrang eingerichtet zur drossellosen Absenkung eines Arbeitsdrucks in der primärseitigen Arbeitsmaschine längs eines jeweiligen Druckabsenkungs-Teilhubs. Bevorzugt ist eine Hochdruckseite der primärseitigen Arbeitsmaschine mittels einer Ventilanordnung von einem Hochdruckspeicher abkoppelbar und auf eine Hochdruckseite der sekundärseitigen Arbeitsmaschine schaltbar. Die sekundärseitige Arbeitsmaschine ist dabei eingerichtet, eine längs des Druckabsenkungs-Teilhubs jeweils verbleibende Druckdifferenz gegenüber eines niedrigeren Druckniveaus als mechanische Nutzenergie auszukoppeln. Diese Ausgestaltung stellt eine effiziente Verwendung der primärseitigen Arbeitsmaschine in Kommunikation bzw. Verbindung mit der sekundärseitigen Arbeitsmaschine bei einer Druckabsenkung sicher.

Gemäß einem bevorzugten Ausführungsbeispiel ist der Abtriebsstrang eingerichtet zur drossellosen Anhebung des Arbeitsdrucks in der primärseitigen Arbeitsmaschine längs eines Druckanhebungs-Teilhubs. Bevorzugt ist eine Niederdruckseite der sekundärseitigen Arbeitsmaschine mittels einer Ventilanordnung von einem Niederdruckniveau bzw. einem Mitteldruckniveau des Abtriebsstrangs abkoppelbar und auf eine Hochdruckseite der primärseitigen Arbeitsmaschine schaltbar. Die sekundärseitige Arbeitsmaschine ist dabei eingerichtet, eine längs des Druckanhebungs-Teilhubs jeweils verbleibende Druckdifferenz gegenüber eines eingangsseitigen, hohen Druckniveaus als mechanische Nutzenergie auszukoppeln. Diese Ausgestaltung stellt eine effiziente Verwendung der primärseitigen Arbeitsmaschine in Kommunikation bzw. Verbindung mit der sekundärseitigen Arbeitsmaschine bei einer Druckanhebung sicher.

Als Hochdruckseite ist dabei bevorzugt eine Seite der Arbeitsmaschine zu verstehen, an welcher der höhere Druck anliegt. Als Niederdruckseite ist dabei bevorzugt eine Seite der Arbeitsmaschine zu verstehen, an welcher der niedrigere Druck anliegt. Die Hoch- bzw. Niederdruckseite kann dabei unabhängig von einem jeweiligen Druckniveau sein.

Als Druckabsenkungs-Teilhub bzw. Druckanhebungs-Teilhub ist dabei bevorzugt ein Teilhub der Arbeitsmaschine zu verstehen.

Die Ventilanordnung kann dabei Teil des Abtriebsstrangs sein oder auch zumindest teilweise durch eine Abtriebsanlage bereitgestellt werden.

Gemäß einem bevorzugten Ausführungsbeispiel ist die sekundärseitige Arbeitsmaschine als Motor ausgebildet, insbesondere als schnelllaufender Schrägscheiben- oder Schrägachsenmotor. Die primärseitige Arbeitsmaschine ist bevorzugt als Arbeitszylinder oder rotatorische Hydraulikmaschine ausgebildet. Es hat sich gezeigt, dass eine translatorische Hubbewegung insbesondere auf der Primärseite zweckdienlich ist.

Bei einer Ausgestaltung der primärseitigen Arbeitsmaschine(n) als Rotationsmaschine wird auf der Niederdruckseite der primärseitigen Arbeitsmaschine(n) bevorzugt ein vergleichsweise niedriges Druckniveau, vorzugsweise ein Minimaldruckniveau eingestellt.

Bevorzugt ist der Abtriebsstrang eingerichtet zur drosselfreien Absenkung eines Arbeitsdrucks der primärseitigen Arbeitsmaschine längs eines Druckabsenkungs-Teilhubs. Über eine geeignete Ventilschaltung und Rückschlagventilanordnung kann eine Hochdruckseite der primärseitigen Arbeitsmaschine von einem Hochdruckspeicher abgekoppelt werden und auf die Hochdruckseite wenigstens einer zugeordneten, sekundärseitigen Arbeitsmaschine geschaltet werden. Die sekundärseitige Arbeitsmaschine ist eingerichtet, die längs des Druckabsenkungs-Teilhubs jeweils verbleibende Druckdifferenz gegenüber eines niedrigeren Druckniveaus als mechanische Nutzenergie auszukoppeln.

Bevorzugt ist der Abtriebsstrang eingerichtet zur drosselfreien Anhebung eines Arbeitsdrucks der primärseitigen Arbeitsmaschine längs eines Druckanhebungs-Teilhubs. Mittels einer geeigneten Ventilschaltung und Rückschlagventilanordnung eine Niederdruckseite der sekundärseitigen Arbeitsmaschine von einem Niederdruckniveau bzw. einem Mitteldruckniveau abgekoppelt werden und auf die Hochdruckseite wenigstens einer zugeordneten primärseitigen Arbeitsmaschine geschaltet werden. Die sekundärseitige Arbeitsmaschine ist eingerichtet, die längs des Druckanhebungs-Teilhubs jeweils verbleibende Druckdifferenz gegenüber eines eingangsseitigen hohen Druckniveaus als mechanische Nutzenergie auszukoppeln.

Gemäß einem bevorzugten Ausführungsbeispiel weist der Abtriebsstrang wenigstens einen zwischen der primärseitigen Arbeitsmaschine und der sekundärseitigen Arbeitsmaschine angeordneten Druckpuffer auf, insbesondere in Form eines feder- oder gasdruckbelasteten Hydraulikspeichers, mittels welchem ein Druckanstieg und/oder Druckabfall während eines jeweiligen Drucktransitions-Teilhubs einstellbar ist. Mittels des Druckpuffers lässt sich das Betriebsverhalten anpassen, insbesondere weicher gestalten. Insbesondere kann bei schwimmerbasierten Wellenenergiewandlern mittels des Druckpuffers auch eine Eintauch-/Austauch-Geschwindigkeit und damit eine Federerwirkung eingestellt werden. Eine Dämpfungswirkung wird dabei bevorzugt zumindest im Wesentlichen vermieden, insbesondere um Energieverlusten vorzubeugen. Im Vergleich zu einem Speicher, welcher bevorzugt in einem engen Druckbereich betrieben wird, kann der Druck in einem Druckpuffer über einen vergleichsweise breiten Bereich variieren. Bevorzugt ist ein Vordruck und/oder ein Puffervolumen wenigstens eines Druckpuffers des Abtriebsstrangs mittels einer Ventilanordnung und/oder mittels einer insbesondere federkraftbasierten oder pneumatischen Vordruckregelung einstellbar.

Gemäß einer Variante werden mehrere Druckpuffer vorgesehen, welche je nach Anregung des Körpers, insbesondere in Abhängigkeit von einem bestimmten Wellenbild, zugeschaltet oder aus dem Abtriebsstrangs entkoppelt werden. Eine Mehrzahl von Druckpuffern ermöglicht, das Betriebsverhalten auf vergleichsweise exakte Weise einzustellen.

Gemäß einem Ausführungsbeispiel sind die Arbeitsmaschinen in Serie anordenbar/angeordnet bzw. verschaltbar, insbesondere während bzw. zumindest für die Zeitdauer eines jeweiligen Drucktransitions-Teilhubs. Die Anordnung in Serie ermöglicht es auf einfache Weise, einen je nach Betriebszustand vorhandenen Drucküberschuss, der auf Seite der primären Arbeitsmaschine nicht benötigt wird, über die sekundäre Arbeitsmaschine zu entspannen und somit als mechanische Nutzleistung abzuführen, insbesondere zur Erhöhung der am Generator verfügbaren Nutzleistung zur Wandlung in elektrischen Strom.

Die zuvor genannte Aufgabe wird auch gelöst durch eine hydraulische Abtriebsanlage mit wenigstens einem erfindungsgemäßen Abtriebsstrang, wobei die Abtriebsanlage eingerichtet ist, wenigstens zwei Überdruckniveaus bzw. Hochdruckniveaus einzustellen, im speziellen Fall der Wellenenergiekonversion bevorzugt in einem Druckverhältnis im Bereich von 2:1 bis 5:1, insbesondere 3:1, eingestellt sind, wobei die Abtriebsanlage eingerichtet ist, beim Druckübergang, insbesondere bei einem Drucktransitions-Teilhub frei werdende hydraulische Energie mittels einer der Arbeitsmaschinen zu nutzen und an einen Generator weiterzuleiten. Dies exemplarisch genannten Druckverhältnisse entsprechen hierbei, von Verlusten abgesehen, unmittelbar dem Verhältnis einer Auszugskraft zur Rückzugskraft, welches insbesondere nach Erfahrungswerten für Wellenenergiekonverter im zuvor genannten Bereich liegt. Der Druckübergang erfolgt dabei bevorzugt drosselfrei bzw. ohne Drosselung, insbesondere um die mit einer Drosselung behafteten Verluste zu vermeiden. Die Abtriebsanlage kann z.B. in Form eines Wellenenergiekonverters bereitgestellt werden.

Dabei können je nach Aufschaltung des betreffenden Druckniveaus auf der Hochdruckseite der primärseitigen Arbeitsmaschine zugeordnete Betätigungskräfte der primärseitigen Arbeitsmaschine auftreten, insbesondere um eine je nach Bewegungsrichtung entsprechend des Drucks unterschiedliche Betätigungskraft der primärseitigen Arbeitsmaschine sicherzustellen.

Die zuvor genannte Aufgabe wird auch gelöst durch eine Abtriebsanlage zur Konversion von mechanischer Energie in elektrische Energie, insbesondere zur Konversion von in aufeinanderfolgenden Arbeitszyklen durch eine auf einen oszillierenden Arbeitshub abbildbare, reziproke Bewegungsbahn eines Körpers beispielsweise aus Meereswellen geernteter Energie, mit:

- wenigstens einem Abtriebsstrang mit wenigstens einer primärseitigen hydraulischen Arbeitsmaschine und wenigstens einer an wenigstens einen Generator koppelbaren sekundärseitigen hydraulischen Arbeitsmaschine, insbesondere wenigstens einem erfindungsgemäßen Abtriebsstrang;
- einer Steuerungsvorrichtung zum Ansteuern der Arbeitsmaschinen und/oder Ventilen der Abtriebsanlage;

wobei wenigstens eine der primärseitigen Arbeitsmaschinen derart mittels der Steuerungsvorrichtung ansteuerbar ist, dass in einem jeweiligen Drucktransitions-Teilhub bei einem Druckübergang zwischen wenigstens zwei Druckniveaus frei werdende hydraulische Energie durch Auskopplung mittels der sekundärseitigen Arbeitsmaschine für die Energiekonversion nutzbar ist. Hierdurch lässt sich bei einfachem Aufbau bzw. einfacher Verschaltung der Komponenten eine hohe Energieausbeute realisieren, und gleichzeitig kann von der Anlage auch Energie zum aktiven Bewegen bzw. Rückstellen des Körpers bereitgestellt werden. Dabei kann oder soll möglichst drosselfrei bzw. ohne Drosselung zwischen den einzelnen Druckniveaus geschaltet werden, insbesondere um die mit Drosseln behafteten Verluste zu vermeiden. Mit anderen Worten ermöglicht die Abtriebsanlage verlustarme, insbesondere stufenlose Umschaltvorgänge in Verbindung mit dem Ausbeuten/Nutzen einer in einer/der Arbeitsmaschine auftretenden Druckdifferenz. Druckänderungen werden dabei gerade nicht mittels einer Drossel abgefedert bzw. dissipiert, sondern werden für die Energiekonversion genutzt.

Bevorzugt können Ventilanordnungen, Druckspeicher, Druckpuffer oder weitere Komponenten von der Abtriebsanlage bereitgestellt werden, insbesondere weitgehend unabhängig von einem (jeweiligen) Abtriebsstrang, so dass auch einzelne Komponenten für mehrere Abtriebsstränge verwendbar sind oder sich mehrere Abtriebsstränge miteinander kombinieren lassen, ohne Redundanz zu schaffen.

Gemäß einem bevorzugten Ausführungsbeispiel weist die Abtriebsanlage wenigstens ein Ventil zum Einstellen von Umkehrpunkten, insbesondere Totpunkten einer die mechanische Energie liefernden auf einen oszillierenden Arbeitshub abbildbaren, reziproken Bewegungsbahn eines/des Körpers auf. Hierdurch kann Einfluss auf die Druckänderungen genommen werden, was eine Regelung der Energiekonversion erleichtert.

Bevorzugt umfasst die Abtriebsanlage wenigstens zwei Speicher zum Einstellen des Drucks des jeweiligen Druckniveaus, insbesondere wenigstens einen Speicher je Druckniveau. Hierdurch lässt sich auch das Zusammenwirken zwischen den Arbeitsmaschinen regeln bzw. optimieren. Gemäß einem bevorzugten Ausführungsbeispiel umfasst die Abtriebsanlage eine Vielzahl von sekundärseitigen Arbeitsmaschinen, welche jeweils einen hydraulischen Freilauf aufweisen, wobei die jeweilige Arbeitsmaschine über jeweils über ein Lastventil zu- und/oder abschaltbar ist. Bevorzugt ist die jeweilige sekundärseitige Arbeitsmaschine über wenigstens ein weiteres Ventil zumindest zeitweise in Serie mit einer jeweiligen primärseitigen Arbeitsmaschine anordenbar. Diese Anordnung ermöglicht eine effiziente Kommunikation zwischen den Arbeitsmaschinen bei gleichzeitig einfachem Aufbau und Flexibilität im Betriebsverhalten.

Im Folgenden werden allgemeine Punkte speziell zum Ernten von Energie aus z.B. Meereswellen erläutert. Die je (Wellen-)Zyklus auszukoppelnde Energiemenge ist definiert als:

$$\oint_S \vec{F}(s) * \vec{l}(s)\ ds$$

mit

$\vec{F}(s)$     auf Körper, insbesondere Schwimmkörper ausgeübte Kraft
$\vec{l}(s)$     Richtungsvektor entlang des Weges "s"
$s$     Trajektorie eines Punktes, an welchem der Körper befestigt ist, insbesondere eines Schwimmkörper-Aufhängungspunktes

Hierbei soll vereinfachend angenommen werden, dass der Schwimmkörper sich wiederkehrend entlang einer geschlossenen Kurve im dreidimensionalen Raum (R3) bewegt und die Integration über einem Bewegungszyklus ausgeführt wird. Bei Anlagen mit nur einem Freiheitsgrad würde sich die Optimierung vereinfachen, da in diesem Fall lediglich der Kraftverlauf entlang dieses einen Freiheitsgrads berücksichtigt werden müsste.

Der Schwimmkörper soll in Abhängigkeit einer Wellenbewegung sowohl bei einer Aufwärtsbewegung als auch bei einer Abwärtsbewegung kontrolliert geführt werden. Um einen optimierten Rohertrag zu erzielen, ist die Phasenlage zwischen Kraft- und Geschwindigkeitsverläufen des Schwimmkörpers relevant. Dabei muss die mittels der Anlage erntebare Auftriebskraft bei der Aufwärtsbewegung des Schwimmkörpers möglichst groß sein, und die von der Anlage aufzubringende Kraft beim Rückholen des Schwimmkörpers im Gegenzug möglichst klein (gegebenenfalls auch negativ) sein. Zudem soll in der Anlage ein möglichst großer Hub (Weg) zurückgelegt werden können. Es hat sich gezeigt, dass sich ein Systemverhalten mit optimierter Resonanz und damit optimiertem Energieertrag bei Phasengleichheit von Kraftanregung und Geschwindigkeitsantwort des Systems bzw. der Anlage einstellen lässt. Die Phasengleichheit kann über eine geeignete Regelung der Systemkräfte erreicht werden.

Im Folgenden erfolgt eine beispielhafte Betrachtung eines rein hydrostatischen Schwimmkörpers, insbesondere um das technische Gebiet der vorliegenden Erfindung näher zu beschreiben.

Ein hydrostatischer Schwimmkörper soll bei der Aufwärtsbewegung im Wellengang möglichst tief oder sogar vollständig eingetaucht sein, um maximale Auftriebskraft zu erzielen. Um einen großen Wellenhub nutzen zu können, darf der Schwimmkörper aber auch nicht zu weit oder tiefer als nötig in die Welle gezogen werden. Bei der Abwärtsbewegung soll die Eintauchung (Grad des Eintauchens) im Gegenzug minimiert werden, da der Auftrieb in dieser Phase als Bremslast entgegen der Bewegungsrichtung wirkt, wodurch mechanische Energie auf den Seegang zurück übertragen wird. Es ist somit erforderlich, die Eintauchtiefe des Schwimmkörpers während des Betriebs der Anlage zyklisch zu verändern. Dies kann durch unterschiedliche Steuerungsstrategien erzielt werden, die für die Bereiche des unteren und oberen Totpunkts zunächst getrennt zu betrachten sind.

Unterer Totpunkt (UT):

1a) Festhalten des Schwimmkörpers im unteren Totpunkt, bis er in der anschließend wieder ansteigenden Welle die für den Arbeitstakt erforderliche bzw. bevorzugte Eintauchtiefe erreicht.

1b) Aktives Absenken des Schwimmkörpers.

Oberer Totpunkt (OT):

2a) Festhalten des Schwimmkörpers im oberen Totpunkt bei zunächst noch hoher (Auftriebs-)Kraft, bis in der anschließend wieder abfallenden Welle die für die Abwärtsbewegung verringerte Eintauchtiefe erreicht wird.
2b) Gesteuertes Austauchen des Schwimmkörpers.

Wird der Schwimmkörper beim Erreichen der jeweiligen Totpunkte festgehalten - Optionen 1a) und 2a) - ist in den Haltephasen keine mechanische Energiezu- oder abfuhr erforderlich.
Das aktive Absenken des Schwimmkörpers - Option 1b) - gegen die zunehmende Auftriebskraft erfordert im Gegenzug eine mechanische Energiezufuhr. Entsprechend tritt ein Energierückgewinn beim gesteuerten Austauchen - Option 2b) - auf. In etwas idealisierter Betrachtung sind beide Energiebeträge gleich. Wird also das aktive Absenken des Schwimmkörpers im Bereich des unteren Totpunkts mit einem gesteuerten Austauchen des Schwimmkörpers im Bereich des oberen Totpunkts kombiniert, sind die erforderlichen Veränderungen der Eintauchtiefe im Bewegungszyklus bezüglich des Rohertrags energetisch neutral.
Ein wesentlicher Unterschied besteht beim Arbeitshub. Bei aktiver Absenkung und gesteuertem Austauchen (Kombination aus 1b) und 2b)) kann der volle Wellenhub, also die Höhendifferenz von Wellenberg zu Wellental, als Arbeitshub bei maximaler Kraftdifferenz in den jeweiligen Bewegungsrichtungen genutzt werden. Bei den Festhalteoptionen (Kombination aus 1a) und 2a)) tritt hingegen ein Hubverlust ein, welcher der Differenz des (nutzbaren) Tiefgangs des Schwimmkörpers in seinen beiden Modi entspricht. Dieser Unterschied ist insbesondere bei kleinen Wellenhöhen und Schwimmkörpern mit großer Höhenausdehnung wesentlich, weswegen entsprechende Steuerungsmodelle und verlustarme, technische Umsetzungen hierzu gesucht werden.
Folgende Ausführungen beziehen sich speziell auf die vom Unternehmen NEMOS (Anmelder der vorliegenden Patentanmeldung) entwickelten Anlagen. Eine Übertragung auf andere schwimmkörperbasierte Wellenenergiekonverter ist möglich.
Erfindungsgemäß wird ein kraftbasiertes Steuerungsmodell vorgeschlagen. Hierbei wird die Kraft, mit der ein Schwimmkörper über die primärseitige Abtriebsmechanik (bei NEMOS-Anlagen: eine Zugmittelkinematik, z.B. Seilkinematik) belastet wird, in Abhängigkeit messbarer Betriebsgrößen und deren Verlauf, insbesondere der Bewegungsgeschwindigkeit und Bewegungsrichtung, gesteuert. Bei einer Kinematik mit einem gesteuerten Freiheitsgrad lautet dies allgemein:

$$F = F(v, dv/dt, [...])$$

mit

F     auf den Schwimmkörper ausgeübte Kraft
v     Bewegungsgeschwindigkeit (vorzeichenbehaftet)
dv/dt     Beschleunigung (vorzeichenbehaftet)
[...]     weitere mögliche Einflussparameter zur Optimierung der Steuerung.

Alternativ zu einer diskretisierten zeitlichen Ableitung dv/dt können in einer getakteten Steuerung auch jeweils Geschwindigkeiten früherer Zeittakte herangezogen werden:

$$F = F(v(n), v(n-1), v(n-2), ..., [...])$$

mit

n     aktueller Zeittakt
n-x     x-ter Zeittakt vor n

Entsprechend den technischen Gegebenheiten der vom Unternehmen NEMOS entwickelten Anlagen wird im Folgenden die Hubbewegung des Schwimmkörpers als "Auszug" und die rücklaufende Bewegung als "Rückzug" bezeichnet. Bei Anlagen mit vertikal wirkenden Schwimmkörpern bzw. Anlagen, bei denen der/die Schwimmkörper eine weitgehend vertikale Bewegung ausführen, sowie bei so genannten Pointabsorbern (insbesondere um eine Hochachse rotationssymmetrischen Bojen) entspricht der Auszug einer Aufwärtsbewegung, und der Rückzug entspricht einer Abwärtsbewegung der Schwimmkörper.
Im Folgenden wird ein Kraftsteuerungsmodell zur Approximation des gewünschten Betriebsverhaltens beschrieben. Ein bevorzugter Arbeitszyklus lässt sich wie folgt darstellen:

- Etwa ab dem unteren Totpunkt und solange kein Abfall der Auszugsgeschwindigkeit festgestellt werden kann, soll der Schwimmkörper mit einer definierten Maximalkraft F_max belastet werden. Diese Kraft entspricht, abzüglich einer geringen Auftriebsreserve, der Auftriebskraft bei Volleintauchung. Die Auftriebsreserve soll sicherzustellen, dass der Schwimmkörper der Welle auch folgt.

- Im Bereich des oberen Totpunkts, bzw. bereits kurz vor Erreichen dessen, soll die Kraft über einem kleinen Zeitbereich kontinuierlich abgesenkt werden, wodurch sich die Eintauchtiefe des Schwimmkörpers entsprechend verringert und schließlich im oberen Totpunkt weitgehend oder vollständig die Minimalkraft F_min erreicht.

- Etwa ab dem oberen Totpunkt bzw. kurz nach diesem und solange kein Abfall der Rückzugsgeschwindigkeit festgestellt werden kann, soll der Schwimmkörper mit minimaler Kraft F_min belastet werden. Bei vom Unternehmen NEMOS entwickelten Anlagen wird das Zugmittel bevorzugt mit einer Mindest-Zugmittelspannung vorgespannt, die zusätzlich zum Eigengewicht des Schwimmkörpers wirkt. Bei geführten Abtriebsmechaniken kann die minimale Rückzugskraft negativ werden, d.h. es ist lediglich ein minimaler Restauftrieb unterhalb der unbelasteten Auflagerkraft erforderlich. Der Restauftrieb soll wiederum sicherstellen, dass der Schwimmkörper der Welle ins Tal folgt.

- Im Bereich des unteren Totpunktes bzw. bereits kurz vor Erreichen dessen, also bei sinkender Rückzugsgeschwindigkeit, soll die Kraft kontinuierlich ansteigen, wodurch der Schwimmkörper tiefer eintaucht und schließlich im unteren Totpunkt wieder weitgehend oder vollständig bis zur maximalen Auftriebskraft eingetaucht ist.

Das gewünschte Verhalten lässt sich nicht als 1-D-Funktion der Auszugsgeschwindigkeit darstellen, da jeweils bereits kurz vor Erreichen der Totpunkte Kraftänderungen erforderlich werden. Dies hat zur Folge, dass für ein und dieselbe Aus- bzw. Rückzugsgeschwindigkeit je nach Position im Bewegungszyklus verschiedene Kräfte erforderlich sind.

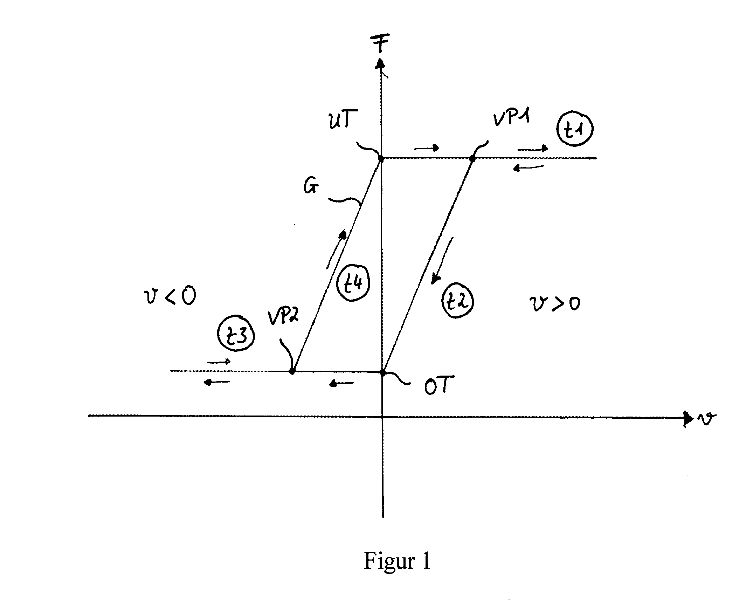

Es hat sich gezeigt, dass sich zur Steuerung eine Hysteresekurve in F(v) anbietet. Figur 1 zeigt dies exemplarisch in sehr einfacher Form (Rautenform).

Insbesondere veranschaulichen die Figuren 1 bis 5 eine Bewegung des Schwimmkörpers. Eine Kraft F ist über einer Geschwindigkeit v aufgetragen. Der Schwimmkörper kann eine Auszugskraft F_aus hervorrufen. Der Schwimmkörper kann mittels einer Rückzugskraft F_rück in einer bestimmten Eintauchtiefe gehalten werden. Ein Grenzpfad G kennzeichnet eine Bewegungsbahn des Schwimmkörpers. Der Schwimmkörper bewegt sich insbesondere zwischen einem oberen Totpunkt OT und einem unteren Totpunkt UT. An einem ersten Verzweigungspunkt VP1 verringert sich die Auszugs-Geschwindigkeit des Schwimmkörpers, und an einem zweiten Verzweigungspunkt VP2 wird die Rückzugs-Geschwindigkeit verringert. Die Phase t1 entspricht einer Auszugsbewegung, die Phase t2 entspricht einem Austauchen, die Phase t3 entspricht einer Rückzugsbewegung, und die Phase t4 entspricht einem Eintauchen. Ein Verzweigungspunkt VP_grenz kennzeichnet eine Grenzgeschwindigkeit kleiner der maximalen Geschwindigkeit auf dem Grenzpfad G, und Beschleunigungsumkehrpunkte AP1, AP2, AP3, APn kennzeichnen jeweils Umkehrpunkte beim Austauchen bzw. bei einer Auszugsbewegung.

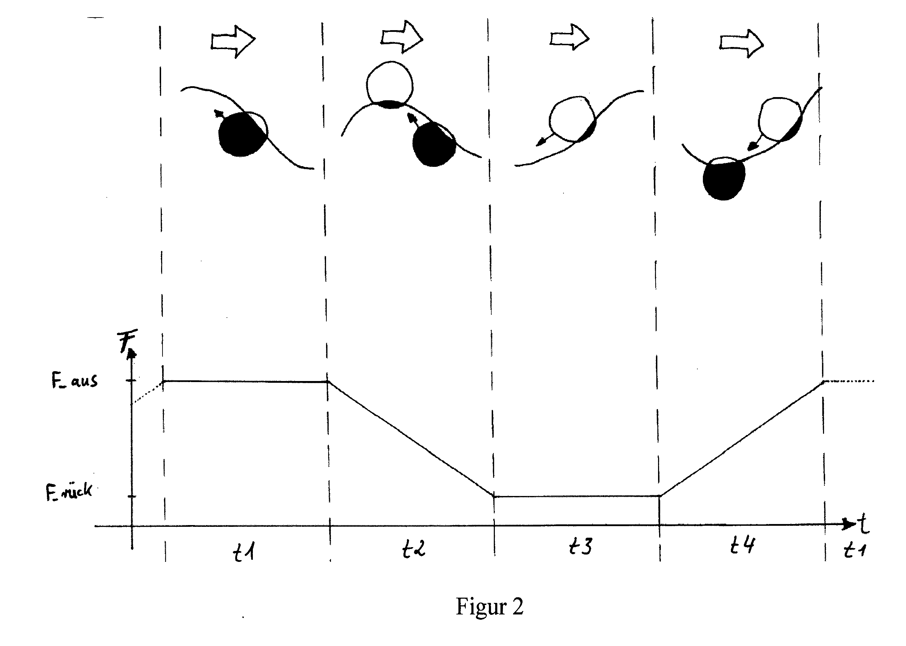

Ein aus der Bewegung des Schwimmkörpers resultierender, zeitlicher Kraftverlauf ist in Figur 2 dargestellt. Die Totpunke (UT und OT in Figur 1) liegen naturgemäß bei v=0, es ist jedoch nicht zwingend erforderlich, dass die Schleifenfläche durch Eckpunkte begrenzt wird, die exakt in den Totpunkten liegen. Der genaue Verlauf der Hysteresekurve ergibt sich vielmehr in Abhängigkeit einer jeweiligen Optimierung der Bewegungsbahn.

Figur 1 zeigt exemplarisch eine Hysterese. Figur 2 zeigt den Verlauf F(t) mit schematischer Wellendarstellung.

Im Folgenden wird ein Anpassungsverhalten in realem Seegang und eine Stetigkeit der Steuerfunktion beschrieben.

Die Steuervorgabe (Vorgabe einer veränderlichen Führungsgröße) erfordert im Allgemeinen einen nachgeschalteten Regler, der dafür sorgt, dass die geforderten Werte auch in akzeptabler Näherung eingehalten werden. Dabei sind Ausnahmen möglich, insbesondere falls das System in sich inhärent stabil ist und die vorgegebenen Führungsgrößen im Stabilitätsbereich liegen.

Eine sehr wesentliche Forderung geregelter Systeme ist im Allgemeinen ein über der Zeit stetiger Verlauf der vorzugebenden Führungsgröße, hier also ein stetiger Kraftverlauf. Zudem sind jeder Abtriebsanlage technische Grenzen gesetzt, sodass eine beliebig schnelle Anpassung der Zugkraft und somit der Eintauchtiefe des Schwimmkörpers nicht erreicht werden kann. Mit anderen Worten: Nicht jede beliebige kleine Wellenbewegung soll berücksichtigt werden.

Obige Hysterese, **Figur 1,** zeigt jedoch zunächst zwei diskrete Pfade für Kraftanstieg (vor UT) und Kraftabfall (vor OT). In idealisiertem Seegang ausreichender Wellenhöhe ist der zeitliche Verlauf der Führungsgröße stetig und je Pfad monoton, da beide Pfade je vollständig in jedem Zyklus durchlaufen werden. Bei sehr kleinen Wellen und bei stochastischer Überlagerung von Wellen höherer Frequenzen in allgemeineren Seegangsspektren werden die Grenzgeschwindigkeiten (Verzweigungspunkte) nicht bzw. nicht in jedem Auszugs- oder Rückzugstakt überschritten. Somit findet eine Beschleunigungsumkehr zwischen den Grenzgeschwindigkeiten statt. Würde die Kraft nun vom aufsteigenden zum absteigenden Ast oder umgekehrt springen, hätte dies eine Verletzung der geforderten Stetigkeit bzw. eine Überlastung der Anlage zur Folge.

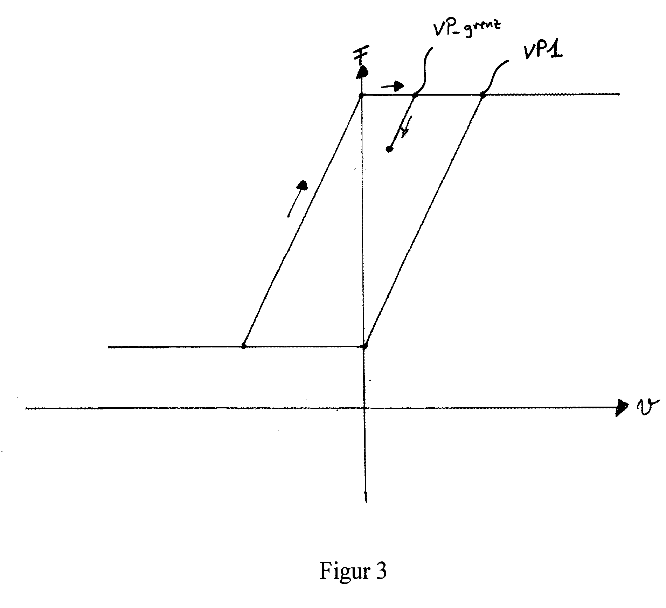

Um auch unter diesen Bedingungen einen stabilen Betrieb sicherzustellen, werden alle Zwischenzustände (Wertepaare v, F) auf der durch die Grenzpfade umschlossenen Schleifenfläche zugelassen. Bei einer Beschleunigungsumkehr vor Erreichen der jeweiligen oberen oder unteren Grenzgeschwindigkeit (Verzweigungspunkte der Hysterese) wird die Kraft entlang einer in der Schleifenfläche verlaufenden, stetigen Kurve verändert, Figur 3. Im skizzierten, einfachen Fall (Rautenform) kann dieser Pfad zunächst eine Gerade mit der Steigung der Grenzpfade sein. Eine Beschleunigung führt somit zu einer linearen Änderung der Kraft, die jedoch durch die zulässigen Extremwerte begrenzt wird. Für eine Zeitstufe n gilt dann:

$$F'(n) = F(n-1) + dF/dv * (v(n) - v(n-1))$$

$$F(n) = \max(F\_min, \min(F'(n), F\_max))$$

Der obige, funktionale Zusammenhang zur Bestimmung von F(n) versteht sich wiederum exemplarisch. Genauere Festlegungen der Kurvenverläufe können Gegenstand weiterführender Optimierungen sein.

In der Figur 3 ist eine Richtungsumkehr vor Erreichen eines Verzweigungspunktes dargestellt.

Obiger Verlauf kann jedoch, je nach Vorgeschichte, zu vergleichsweise hohen und somit kontraproduktiven Rückzugskräften führen, die zumindest auf Dauer vermieden werden sollen, bzw. zusätzlich durch technische Grenzen der Abtriebsanlage begrenzt sind. Dies ist der Fall, wenn bei hoher Kraft (entsprechend dem oberen Rand der Hystereschleife, jedoch vor Erreichen des oberen Verzweigungspunkts) eine Beschleunigungsumkehr stattfindet. Es ist daher sinnvoll, einen soweit technisch möglichen steileren Verlauf der Kraftänderung im Inneren der umschlossenen Schleifenfläche zu wählen, der gegebenenfalls zwischen Kraftanstieg und Kraftabfall unterscheidet.

$$F'(n) = F(n-1) + (dF/dv)\_grow * (v(n) - v(n-1)) \qquad \text{für } (v(n) - v(n-1)) > 0$$

$$F'(n) = F(n-1) + (dF/dv)\_fall * (v(n) - v(n-1)) \qquad \text{für } (v(n) - v(n-1)) < 0$$

wobei es im Allgemeinen sinnvoll sein wird, folgende Abhängigkeit zu wählen:

$$(dF/dv)\_grow <= (dF/dv)\_fall <= (dF/dv)\_gr$$

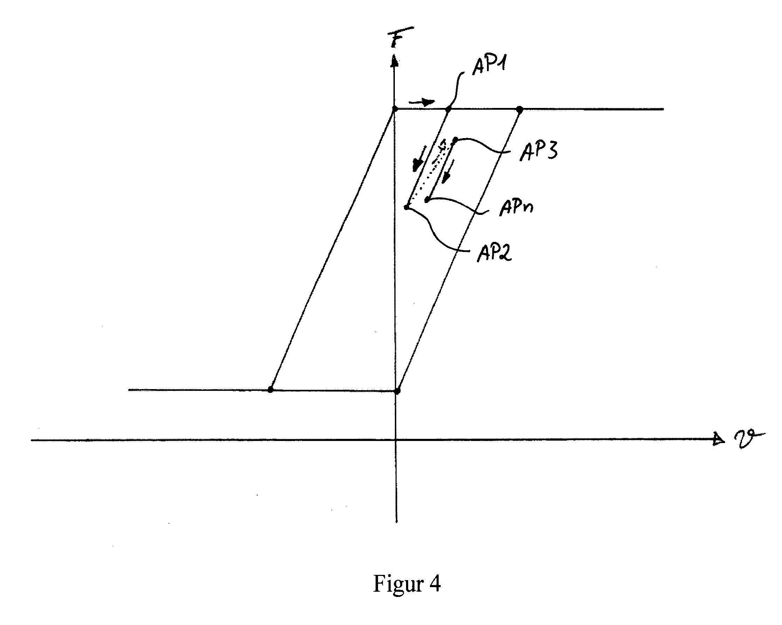

Hierbei stehen die Indizes "_grow" und "_fall" für ansteigende bzw. sinkende Geschwindigkeit. Index "_gr" steht für die Grenzpfade. Wiederum sind die maximale und minimale Kraft einzuhalten. Zudem darf der Betriebszustand die Schleifenfläche nicht durch Überschreitung der Grenzpfade verlassen, wie in Figur 4 angedeutet.

Figur 4 zeigt eine mehrfache Beschleunigungsumkehr während eines Auszugs, also eine Bewegung im Auszugsbereich bzw. während einer Aufwärtsbewegung eines Schwimmkörpers einen Wellenberg hinauf.

Es hat sich gezeigt, dass vor allem ein zügiger Kraftabfall bei negativen Geschwindigkeiten (Rückzug) sichergestellt werden soll, insbesondere um hohe Verluste und Belastungen zu vermeiden.

Im Folgenden werden Erläuterungen zu einem Teillastverhalten gemacht.

Der Seegang zeichnet sich üblicherweise durch stark wechselnde Bedingungen aus, sei es aufgrund von Dünung, drehenden Winden, oder sich stark/schnell ändernder Wind- oder Stromrichtung. Um ein möglichst großes Spektrum von Wellenbildern effektiv nutzen zu können, ist daher eine Optimierung der Steuerung in Hinblick auf verschiedene Wellenhöhen erforderlich.

Aufgrund der Kraftanpassungen jeweils kurz vor OT und UT wäre eine entsprechende Maschine prinzipiell in der Lage, beliebig kleine Wellenhübe bei voller Kraftdifferenz, Auszug versus Rückzug, abzuernten. Da geringe Wellenhöhen jedoch im Allgemeinen bei höheren Frequenzen vorliegen, wäre eine sehr schnelle, aktive Anpassung der Eintauchtiefen erforderlich, was einen hohen Leistungsbedarf (positiv wie negativ) erfordern würde. Da die aktiven Veränderungen der Eintauchtiefe zudem aufgrund der technischen Eigenschaften der beteiligten Maschinen und Komponenten trotz der beschriebenen Drucktransitions-Teilhübe nicht vollständig verlustfrei ablaufen, ist eine Absenkung der Maximalkraft und somit der maximalen Eintauchtiefe bei kleinen Wellen auch bezüglich der Ernteoptimierung zweckdienlich. Ebenso wird sich die minimal erforderliche Rückzugskraft bei kleinen Wellen voraussichtlich verringern lassen.

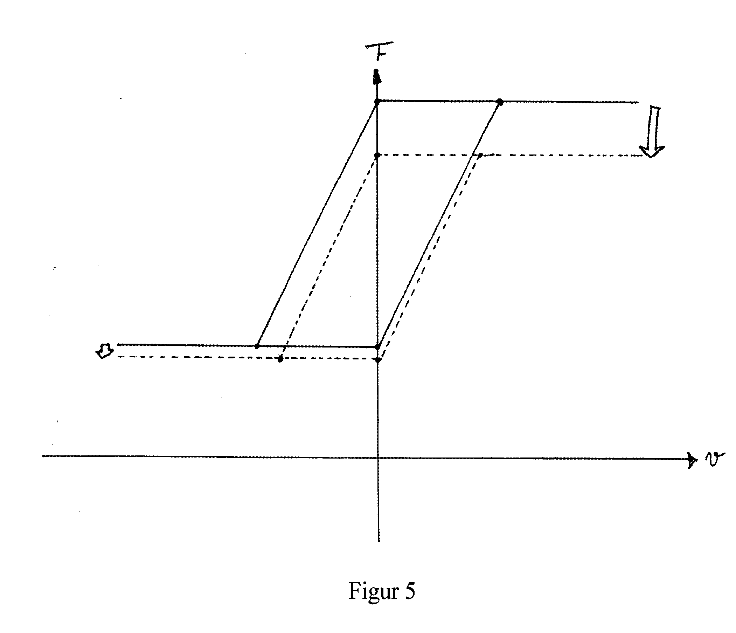

Die Anpassung der maximalen und minimalen Kräfte erfolgt bevorzugt kontinuierlich in Hinblick auf ein jeweiliges aktuelles Wellenbild, nicht jedoch bezüglich einzelner Wellen. Im einfachsten Fall können die Gradienten der Grenzpfade zumindest annähernd beibehalten werden, was allerdings kein notwendiges Kriterium ist. Figur 5 zeigt dies exemplarisch für die einfache, rautenförmige Hysteresekurve, wobei angenommen wurde, dass beide Grenzkraftniveaus sich ähnlich verändern lassen. Dabei zeigt Figur 5 eine Teillastanpassung der Kraftniveaus.

Im Folgenden wird ein erfindungsgemäßer hydraulischer Abtriebsstrang bzw. eine erfindungsgemäße hydraulische Abtriebsanlage beschrieben.

Obige Steuerstrategie kann durch eine erfindungsgemäße hydraulische Abtriebsanlage zumindest näherungsweise realisiert werden, was die folgenden Vorteile liefert:

Die Verwendung handelsüblicher Komponenten ist möglich, vor allem handelsüblicher Hydraulikmotoren und Pumpen. Insbesondere sind Maschinen, die eine sehr präzise und schnelle Einstellung der Schluckvolumina ermöglichen würden, nicht erforderlich. Dies ist nicht zuletzt deshalb von Vorteil, da derartige Maschinen bisher auf dem Markt nicht verfügbar sind. Ferner kann eine Anpassung des maximalen und minimalen Kraftniveaus erfolgen. Ein Betrieb mehrerer Schwimmkörper unter Verwendung gemeinsam genutzter Komponenten, insbesondere gemeinsamer Druckspeicher und/oder eines gemeinsamen Generators, ist auf einfache Weise möglich. Es kann eine verlustarme Veränderung der Bewegungsbahn des/der Körper vorgenommen werden, insbesondere eine verlustarme Veränderung der Eintauchtiefe der Schwimmkörper, insbesondere mittels kontinuierlicher Steigerung der hydraulisch erzeugten Kräfte auf den/die Körper. Bevorzugt werden dabei keine Drosseln/Drosselelemente verwendet. Vielmehr werden alle Druckabfälle bevorzugt über die Arbeitsmaschinen selbst geleitet und in Nutzenergie gewandelt.

Die zuvor genannte Aufgabe wird auch gelöst durch eine Steuerungsvorrichtung zum Steuern und/oder Regeln einer hydraulischen Abtriebsanlage, insbesondere zum Steuern und/oder Regeln eines Abtriebsstrangs eines Wellenenergiekonverters auf wenigstens zwei Druckniveaus, dadurch gekennzeichnet, dass die Steuerungsvorrichtung eingerichtet ist, wenigstens eine Arbeitsmaschine und/oder wenigstens ein Ventil der hydraulischen Abtriebsanlage derart anzusteuern, dass bei Drucktransitions-Teilhüben, insbesondere zwischen Totpunkten einer auf einen oszillierenden Arbeitshub abbildbaren, reziproken Bewegungsbahn eines Körpers, beim Druckübergang frei werdende hydraulische Energie von der wenigstens einen Arbeitsmaschine aufgenommen wird. Hierdurch ergeben sich bereits zuvor genannte Vorteile.

Bevorzugt ist die Steuerungsvorrichtung eingerichtet, eine sekundärseitige Arbeitsmaschine der hydraulischen Abtriebsanlage derart anzusteuern, dass frei werdende hydraulische Energie mittels der Arbeitsmaschine geerntet wird, insbesondere in Verbindung mit wenigstens einem Ventil und wenigstens einem Speicher, und insbesondere auch in Abhängigkeit von der Lage zweier Totpunkte der oszillierenden Bewegung.

Bevorzugt ist die Steuerungsvorrichtung eingerichtet, eine oder mehrere Arbeitsmaschinen mit einer gewissen Vorspannung bzw. auf einem gewissen Vordruck zu halten, um verlustarm Energie zwischen der Arbeitsmaschine und dem Körper bzw. dem Körper und der Arbeitsmaschine (also in beiden Richtungen) zu übertragen.

Bevorzugt steht die Steuerungsvorrichtung in Verbindung mit einem zwischen der primärseitigen Arbeitsmaschine und der sekundärseitigen Arbeitsmaschine angeordneten Druckpuffer und ist eingerichtet, einen Druckanstieg und/oder Druckabfall während eines jeweiligen Drucktransitions-Teilhubs einzustellen.

Die zuvor genannte Aufgabe wird auch gelöst durch ein Verfahren zum Steuern und/oder Regeln eines hydraulischen Abtriebsstrangs, welcher zur Konversion von insbesondere zwischen Totpunkten einer auf einen oszillierenden Arbeitshub abbildbaren, reziproken Bewegungsbahn eines Körpers erzeugter mechanischer Energie, insbesondere von Wellenenergie, in elektrische Energie eingerichtet ist und bevorzugt wenigstens zwei Druckniveaus aufweist, umfassend die Schritte:

- Ansteuern wenigstens einer primärseitigen Arbeitsmaschine des Abtriebsstrangs, insbesondere in Abhängigkeit der Bewegung des Körpers und/oder der vom Körper auf die primärseitige Arbeitsmaschine ausgeübten Kraft, speziell während der Bewegung des Körpers in einer ersten Richtung;
- Ansteuern wenigstens einer sekundärseitigen Arbeitsmaschine und/oder wenigstens eines sekundärseitigen Ventils des Abtriebsstrangs zum Einleiten/Durchführen von Drucktransitions-Teilhüben, insbesondere in Abhängigkeit der Bewegung des Körpers und/oder der vom Körper auf die sekundärseitige Arbeitsmaschine ausgeübten Kraft, speziell während der Bewegung des Körpers in einer zweiten Richtung; und
- Ansteuern wenigstens einer der Arbeitsmaschinen zum Ernten von beim Druckübergang, insbesondere bei einem Drucktransitions-Teilhub, frei werdender hydraulischer Energie mittels wenigstens einer der Arbeitsmaschinen. Die geerntete hydraulische Energie kann dann an einen Generator weitergeleitet werden. Hierdurch ergeben sich bereits zuvor genannte Vorteile.

Speziell bei einem Wellenenergiekonversionsverfahren kann eine Druckabsenkung beim Austauchen und eine Druckerhöhung beim Eintauchen eines/der Schwimmkörper erfolgen. Bevorzugt wird eine Eintauchtiefe wenigstens eines Schwimmkörpers eines den Abtriebsstrang umfassenden Wellenenergiekonverters geregelt, insbesondere teilweise oder vollständig über drosselfrei bzw. ohne Drosselung ausgeführte Drucktransitions-Teilhübe der Bewegung des Schwimmkörpers.

Bevorzugt wird die primärseitige Arbeitsmaschine zur Aufnahme einer insbesondere längs eines jeweiligen Drucktransitions-Teilhubs variablen Druckbelastung angesteuert und die sekundärseitige Arbeitsmaschine zum Auskoppeln einer jeweiligen verbleibende Druckdifferenz als mechanische Nutzenergie angesteuert.

Bevorzugt wird ein Eintauchventil zum Einleiten/Durchführen eines Druckanhebungs-Teilhubs in einer Richtung geschlossen und/oder es wird ein Lastventil geschlossen und ein Austauchventil geöffnet zum Einleiten/Durchführen eines Druckabsenkungs-Teilhubs.

Bevorzugt wird eine Druckdifferenz in der Arbeitsmaschine sowohl bei einer Druckanhebung bzw. einem Druckanhebungs-Teilhub als auch einer Druckabsenkung bzw. einem Druckabsenkungs-Teilhub genutzt bzw. ausgekoppelt.

Gemäß einer Variante kann das Steuern/Regeln dadurch erfolgen, dass ein erstes Druckniveau oder ein erster Druckkreislauf zum Regeln der Eintauchtiefe bei einer Aufwärtsbewegung des Auftriebskörpers angesteuert wird und ein zweites Druckniveau oder ein zweiter Druckkreislauf mit einem Druckniveau kleiner als das erste Druckniveau bei einer Abwärtsbewegung des Auftriebskörpers angesteuert wird.

Gemäß einem bevorzugten Ausführungsbeispiel wird eine primärseitige Arbeitsmaschine in einem Energie erzeugenden Arbeitshub auf wenigstens einem ersten Überdruckniveau als Pumpe eingesetzt und in einem Rückzugshub von wenigstens einem zweiten Überdruckniveau gespeist. Bevorzugt wird dabei wenigstens eine sekundärseitige Arbeitsmaschine zwischen dem ersten und zweiten Überdruckniveau als Motor eingesetzt. Hierdurch lässt sich auf einfache Weise ein Kraftverhältnis einstellen, insbesondere mittels einer als solche bezeichnenbaren Mitteldruckanlage, bei welcher wenigstens ein mittleres Druckniveau für eine aktive Rückzugs- bzw. Rückstellbewegung des Körpers bereitgestellt wird.

Gemäß einem bevorzugten Ausführungsbeispiel wird im Bereich eines ersten Umkehrpunktes, insbesondere eines oberen Totpunkts, der Bewegung des Körpers, insbesondere im Bereich eines Wellenkamms, ein Druckabsenkungs-Teilhub einer/der mit dem Körper verbundenen primärseitigen Arbeitsmaschine ausgeführt. Hierdurch kann die durch Verringerung der Eintauchtiefe freiwerdende Verdrängungsarbeit zurückgewonnen werden.

Gemäß einem Ausführungsbeispiel wird im Bereich eines zweiten Umkehrpunktes, insbesondere eines unteren Totpunkts, der Bewegung des Körpers, insbesondere im Bereich eines Wellentals, ein Druckanhebungs-Teilhub einer/der mit dem Körper verbundenen primärseitigen Arbeitsmaschine ausgeführt. Hierdurch wird die für die Vergrößerung der Eintauchtiefe erforderliche Verdrängungsarbeit drosselfrei zur Verfügung gestellt.

Gemäß einem Ausführungsbeispiel wird in einem jeweiligen Drucktransitions-Teilhub bzw. während eines jeweiligen Drucktransitions-Teilhubs einer primärseitigen Arbeitsmaschine dieser Arbeitsmaschine wenigstens eine sekundärseitige Arbeitsmaschine zugeordnet/zugeschaltet. Hierdurch ergeben sich bereits zuvor im Zusammenhang mit dem Schalten in Serie bzw. mit der zumindest zeitweisen Serienanordnung genannte Vorteile. Diese Zuordnung ist nur in den Zeitintervallen erforderlich, in denen ein Drucktransitions-Teilhub ausgeführt wird. Zu übrigen Zeiten kann/können die sekundärseitige(n) Arbeitsmaschine(n) über ein oder mehrere Lastventile frei geschaltet werden, insbesondere um eine jeweils angepasste Leistungsauskopplung zu ermöglichen, insbesondere auch mit dem Ziel, das hochdruckseitige Druckniveau in vorgegebenen Grenzen zu regeln. Solange keine Drucktransitions-Teilhub ausgeführt werden, sind die Sekundäreinheiten über ein oder mehrere Lastventile frei schaltbar.

Die zuvor genannte Aufgabe wird auch gelöst durch ein Energiekonversionsverfahren zum Konvertieren von mechanischer Energie, insbesondere von in aufeinanderfolgenden Arbeitszyklen einer auf einen oszillierenden Arbeitshub abbildbaren, reziproken Bewegungsbahn eines Körpers geernteter Energie, in elektrische Energie mittels eines hydraulischen Abtriebsstrangs, wobei wenigstens eine hydraulische Arbeitsmaschine des hydraulischen Abtriebsstrangs derart betrieben, beaufschlagt, gekoppelt oder verkuppelt wird, dass durch Druckübergang zwischen wenigstens zwei Druckniveaus frei werdende hydraulische Energie von der wenigstens einen Arbeitsmaschine für die Energiekonversion genutzt wird zur Auskopplung der hydraulischen Energie mittels der wenigstens einen Arbeitsmaschine, insbesondere zum Zurückspeisen für eine aktive Bewegung des Körpers und/oder zum Weiterleiten an einen Generator. Hierdurch ergeben sich bereits zuvor genannte Vorteile, insbesondere auch eine hohe Effizienz bei der Energiekonversion. Beispielsweise kann das Energiekonversionsverfahren beim Ernten von Wellenenergie aus Meereswellen eingesetzt werden. Bevorzugt sind im Abtriebsstrang (jeweils) zwei hydraulische Arbeitsmaschinen während bzw. zumindest für die Zeitdauer eines jeweiligen Drucktransitions-Teilhubs in Serie angeordnet verschaltet, wobei zwischen den Arbeitsmaschinen ein Druckpuffer angeordnet sein kann.

Die zuvor genannte Aufgabe kann auch gelöst werden durch die Verwendung einer Arbeitsmaschine in einem hydraulischen Abtriebsstrang zur Konversion mechanischer Energie in elektrische Energie durch Aufnahme/Ernten von in einem Drucktransitions-Teilhub frei werdender hydraulischer Energie mittels der Arbeitsmaschine, insbesondere zum Weiterleiten dieser Energie an einen Generator.

Die zuvor genannte Aufgabe kann wahlweise auch gelöst werden durch die Verwendung wenigstens einer sekundärseitigen Arbeitsmaschine einer hydraulischen Abtriebsanlage mit wenigstens zwei Druckniveaus zur Aufnahme von bei drosselfreiem bzw. ohne Drosselung erfolgendem Schalten zwischen den Druckniveaus, insbesondere bei einem Drucktransitions-Teilhub, frei werdender hydraulischer Energie und zur Konversion der Energie in elektrische Energie, wobei die sekundärseitige Arbeitsmaschine jeweils einer primärseitigen Arbeitsmaschine zugeordnet wird.

Entsprechend kann die zuvor genannte Aufgabe auch gelöst werden durch Verwendung wenigstens einer sekundärseitigen Arbeitsmaschine einer hydraulischen Abtriebsanlage zur Aufnahme von beim Schalten zwischen wenigstens zwei Druckniveaus frei werdender hydraulischer Energie und zur Konversion der Energie in elektrische Energie.

Die zuvor genannte Aufgabe kann wahlweise auch gelöst werden durch die Verwendung wenigstens einer hydraulischen Arbeitsmaschine in einem Abtriebsstrang eines Wellenenergiekonverters zur Konversion von durch Bewegung wenigstens eines Schwimmkörpers in Meereswellen erzeugter mechanischer Energie in elektrische Energie durch Aufnahme/Ernten von bei einem Drucktransitions-Teilhub frei werdender hydraulischer Energie mittels der Arbeitsmaschine und Weiterleiten an einen Generator, insbesondere beim Regeln der Eintauchtiefe des wenigstens einen Schwimmkörpers, bevorzugt jeweils in Bezug auf einzelne Meereswellen.

Die zuvor genannte Aufgabe kann wahlweise auch gelöst werden durch die Verwendung eines erfindungsgemäßen hydraulischen Abtriebsstrangs zum Aufnehmen/Ernten von in einem Drucktransitions-Teilhub einer hydraulischen Arbeitsmaschine des Abtriebsstrangs frei werdender hydraulischer Energie. Bei der jeweiligen Verwendung ergeben sich jeweils bereits zuvor genannte Vorteile.

In den Zeichnungsfiguren 1 bis 7 wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Dabei zeigen:

Figur 1     in schematischer Darstellung ein Kraft-Geschwindigkeit-Diagramm, in welchem ein Grenzpfad einer Bewegung eines Körpers gezeigt ist, welcher zur Erzeugung von mechanischer Energie zum Ausführen vordefinierter Bewegungen ansteuerbar ist;

Figur 2     in schematischer Darstellung einen Körper in einem Wellensystem zu unterschiedlichen Phasen, in welchen jeweils eine bestimmte Ansteuerung eines erfindungsgemäßen hydraulischen Abtriebsstrangs zum Bewegen des Körpers entlang eines effizienten Bewegungspfades mittels eines erfindungsgemäßen Verfahrens erfolgen kann;

Figur 3     in schematischer Darstellung Zwischenzustände auf einer vom Grenzpfad umschlossenen Fläche, in welchen der Körper jeweils einstellbar ist;

Figur 4     in schematischer Darstellung weitere Zwischenzustände, die bei Beschleunigungsumkehr auftreten können;

Figur 5     in schematischer Darstellung eine Veränderung von Grenzkraftniveaus zur Teillastanpassung der Abtriebsanlage;

Figur 6     in schematischer Darstellung einen Hydraulik-Schaltplan für eine erfindungsgemäße Anlage; und

Figur 7     in schematischer Darstellung einen erfindungsgemäßen Abtriebsstrang, welcher zwischen einem bewegten Körper und einem Generator vorgesehen ist, wobei der Abtriebsstrang über Zugmittel mit dem Körper verbunden ist.

Die Figuren 1 bis 5 wurden bereits zuvor beschrieben.

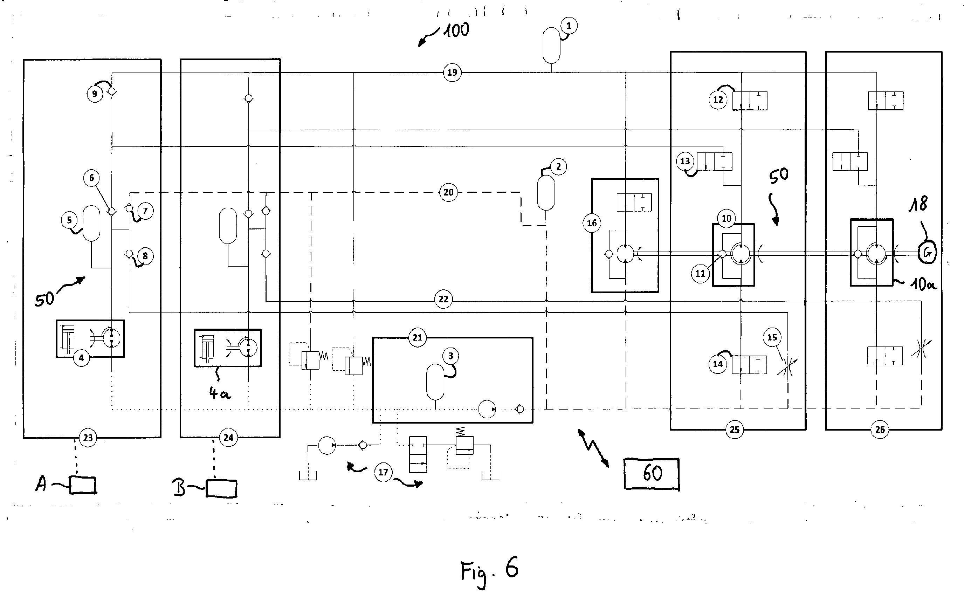

In der Fig. 6 ist der Aufbau eines erfindungsgemäßen hydraulischen Abtriebsstrangs bzw. einer Abtriebsanlage 100 umfassend den Abtriebsstrang gezeigt. Insbesondere weist die Abtriebsanlage die folgenden Komponenten auf: einen Hochdruckspeicher 1, einen Mitteldruckspeicher 2, optional einen Niederdruckspeicher 3 mit Ausgleichspumpe (entfällt gegebenenfalls bei Zylinder), eine hydraulische Primäreinheit 4, 4a, die jeweils einem (Schwimm-)Körper zugeordnet ist, einen Druckpuffer 5, welcher eine Eintauch-/Austauch-Geschwindigkeit bzw. eine Federwirkung definieren kann, ein Rückschlagventil 6, welches im Pumpbetrieb öffnet, insbesondere zur Sicherheit bezüglich einer Fehlschaltung des Ventils 13, ferner ein Rückschlagventil 7, welches bei Minimalkraft-Rückzug öffnet, ferner ein Rückschlagventil 8, welches beim Eintauchen (Druckanstieg um UT) öffnet, und ein Rückschlagventil 9, welches im Pumpbetrieb in gemeinsame Hochdruckleitung öffnet und gegebenenfalls parallel zum Rückschlagventil 6 geschaltet ist. Die Ventile 6, 7, 8 und 9 können als passive Ventile ausgeführt sein, welche nicht notwendigerweise beschaltet werden müssen.

Eine hydraulische Sekundäreinheit 10, 10a steht jeweils in Verbindung mit der hydraulischen Primäreinheit 4, 4a, wobei ein Motor je Schwimmkörper vorgesehen ist, welcher jeweils beim Ein-/Austauchen dem Schwimmkörper zugeordnet wird. Ferner weist die Abtriebsanlage ein bevorzugt passives Freilaufventil 11 auf, ein Lastventil 12 für den Motor 10, welches frei schaltbar ist (außer im Druckabsenkungs-Teilhub des zugeordneten Schwimmkörpers im Bereich von OT (geschlossen) und im Druckanhebungs-Teilhub des zugeordneten Schwimmkörpers im Bereich von UT (offen)), ferner ein Austauchventil 13, welches den Druckabsenkungs-Teilhub des zugeordneten Schwimmkörpers im OT-Bereich steuert, bzw. ein Eintauchventil 14, welches den Druckanhebungs-Teilhub des zugeordneten Schwimmkörpers im UT-Bereich steuert, eine Drossel 15 (insbesondere für sehr kleine Durchflussmengen) eingerichtet zum Verhindern von Druckentkopplung bei versehentlich gleichzeitig geschlossenen Ventilen (13, 14, 15), wobei ein Ersatz durch ein Druckbegrenzungsventil erfolgen kann. Die Drossel 15 kann insbesondere zur Vermeidung von Fehlsteuerung vorgesehen sein. Bevorzugt werden die Ventile 12, 13 und 14 aktiv geschaltet. Ferner weist die Abtriebsanlage eine Motoreinheit 16 zur Verlustkompensation auf, insbesondere bei Dauervolllast, sowie einen Ölvorrat 17 bzw. ein Leckstromsystem bzw. einen Ablauf, und schließlich auch einen/den Generator 18.

Die in der Figur 6 gezeigten Komponenten bilden eine hydraulische Abtriebsanlage 100, welche insbesondere auch eine Vielzahl von Speichern oder Puffern aufweist. Dabei ist durch die Bezugsziffer 50 ein hydraulischer Abtriebsstrang angedeutet, welcher sich zumindest von einer/der hydraulischen primärseitigen Arbeitsmaschine 4 bis hin zum Generator 18 erstreckt und durch zwischen wenigstens einem bewegten (Schwimm-)Körper und dem Generator 18 wirkenden Komponenten gebildet ist. Eine Steuerungsvorrichtung 60 ist in Kommunikation mit einzelnen Komponenten der Anlage bzw. des Strangs, wie durch den Doppelpfeil schematisch angedeutet. Der/die bewegten Körper sind jedoch nicht notwendigerweise Bestandteil der Abtriebsanlage 100. Vielmehr können diese mittels Zugmitteln (nicht dargestellt) und über geeignete Getriebe mit den zugeordneten hydraulischen Primäreinheiten verbunden sein.

Als primärseitige Hydraulikeinheit 4 werden bevorzugt entweder klassische Hydraulikzylinder oder langsam laufende Hydraulikmotoren/-pumpen konstanten Schluckvolumens verwendet. Beiden Maschinentypen ist gemein, dass die über ein Getriebe oder direkt erzeugte Kraft proportional zur Druckdifferenz ist. Eine Kraftsteuerung kann somit über eine Steuerung der betreffenden Hydraulikdrücke vorgenommen werden. Insbesondere sind Umschaltungen des Schluckvolumens mittels handelsüblichen Maschinen nicht realisierbar. Ein einstellbares Schluckvolumen ist jedoch insbesondere bei schnelllaufenden Sekundäreinheiten möglich und zwecks exakter Regelung von Vorteil.

Erfindungsgemäß wird eine Anlage mit wenigstens zwei Überdruckniveaus, nachfolgend mit "p_hoch" für einen Hochdruckteil 19 und "p_mittel" für einen niedrigeren Mitteldruckteil 20 bezeichnet, vorgeschlagen. Beide Schienen bzw. Druckniveaus 19, 20 verfügen über eigene Speichersysteme (1, 2), die bevorzugt als klassische hydropneumatische Speicher ausgeführt werden. Bei Verwendung von Hydraulikmotoren (anstelle von Zylindern) umfasst der Abtriebsstrang bzw. die Abtriebsanlage bevorzugt zudem eine Niederdruckschiene (3, 21), Druck "p_min", welche einen eingangsseitigen Minimaldruck der Maschinen bereitstellen kann. Schließlich ist bevorzugt auch ein druckloses Lecköelsystem mit Rückführpumpe (17) vorgesehen.

Zwischen dem Hochdruckniveau 19 und dem Mitteldruckniveau 20 kann wenigstens ein weiteres variables Druckniveau (p_variable) 22 vorgesehen sein, mittels welchem eine Serienschaltung realisierbar ist. Eine Serienschaltung kann auch mittels der zwischen den in Figur 6 dargestellten Leitungen 19 und 20 angeordneten Leitungen realisiert werden.

Das Druckniveau im Hochdruckteil 19 kann entsprechend der zuvor erwähnten Proportionalität (Kraft zu Druckdifferenz) durch Beschaltung der primärseitigen Arbeitsmaschine(n) 4 die Maximalkraft auf den Schwimmkörper in dessen Aufwärtsbewegung bestimmen. Entsprechend kann über die Vorgabe des Drucks im Mitteldruckteil die Minimalkraft im Rückzug der Maschine gesteuert werden. Beispielsweise liegt das Kraftverhältnis "Auszug zu Rückzug" bei ca. 3:1. Der Druck in der Mitteldruckschiene ist entsprechend geringer. In der Thermodynamik wird eine Zustandsänderung eines Systems, in der für Druck p und Volumen V die Gleichung $p \cdot V^{exp(n)} = const.$ gilt, als polytrop bezeichnet. Der Exponent n wird Polytropenexponent genannt. Es hat sich gezeigt, dass aufgrund eines günstigeren Polytropenexponenten des Gaspuffers bei moderaten Überdrücken der geringere Druck in der Mitteldruckschiene zu einem günstigeren Verhalten von hydropneumatischen Energiespeichern (2) führt.

Als sekundärseitige Arbeitsmaschinen (10, 10a) werden bevorzugt schnelllaufende Hydraulikmotoren eingesetzt, insbesondere Maschinen mit stellbarem Schluckvolumen (z.B. Schrägscheibenmaschinen) oder mit konstantem Schluckvolumen (z.B. Schrägachsenmaschinen). Bevorzugt treiben alle Sekundärmaschinen auf gemeinsamer Welle einen ebenfalls gemeinsamen Generator (18) an. Die Sekundärmaschinen verfügen bevorzugt jeweils über einen hydraulischen Freilauf (11), der es ermöglicht, diese in beliebiger Taktung über Lastventile (12) zu- und abzuschalten. Dabei wird bevorzugt im engen Zeitbereich um die Totpunkte des Arbeitszyklus jeder primärseitigen Arbeitsmaschine eine jeweilige sekundärseitige Arbeitsmaschine zugeordnet. Zusätzlich kann eine kleine sekundärseitige Motoreinheit (16) als Dauerläufer vorgesehen werden, die einen zu großen Abfall der Betriebsdrehzahl des Generators (18) verhindern kann. Statt mehrerer Motoren können auch geeignete Kombinationsmotoren entwickelt oder vorgesehen werden, die bevorzugt über mehrere Zylindergruppen mit jeweils eigenem Vor- und Rücklauf verfügen.

In der Figur 6 ist ferner angedeutet, welche Komponenten jeweils eine Primärseite 23, 24 für einen (ersten) Auftriebskörper/Schwimmkörper A und einen oder mehrere (weitere) Auftriebskörper/Schwimmkörper B bilden können, und welche Komponenten eine Sekundärseite 25, 26 für den (ersten) Auftriebskörper/Schwimmkörper A und den einen oder die mehreren (weiteren) Auftriebskörper/Schwimmkörper B bilden können. Die Schwimmkörper A, B sind jeweils mit der Primärseite 23, 24 verbunden.

Im Folgenden werden Details einer bevorzugten Anordnung bzw. eines bevorzugten Verfahrens beschrieben.

Alle primärseitigen Arbeitsmaschinen pumpen im Arbeitstakt ab Erreichen der Maximalkraft Hydraulikflüssigkeit in den Hochdruckteil ("p_hoch"). Kommen Motoren/Pumpen (statt Zylinder) zum Einsatz, werden diese niederdruckseitig aus der Minimaldruckschiene ("p_min") versorgt. Beim Rückzug mit hoher Geschwindigkeit werden die Primärmaschinen aus der Mitteldruckschiene (2) gespeist und führen das Hydrauliköl im Fall rotatorischer Maschinen in den Niederdruckteil (3) zurück. Die Sekundärmaschinen schließen das System und arbeiten zwischen der Hochdruck- und Mitteldruckschiene.

Beide Überdruckniveaus, p_hoch und p_mittel, und folgend beide Kraftniveaus, F_max und F_min, werden bevorzugt über den Gasdruck in den Speichern (1, 2) eingestellt. Hierzu werden Pneumatikpumpen und zusätzliche Gasbehälter vorgesehen. Deren Pumparbeit ist jedoch vernachlässigbar, da lediglich bei Veränderung der Grenzkräfte zur Anpassung an veränderte Seegangsbedingungen eine Einstellung des Gasdrucks vorgenommen werden muss. Da der Vorgang langsam sein darf, sind nur geringe Pumpleistungen einer entsprechenden Pneumatikanlage erforderlich.

Der mittlere Flüssigkeitsspiegel im Hochdruckspeicher (1) wird über die Durchflussmenge der Sekundäreinheiten geregelt, was je nach Maschinentyp über eine Anpassung der Schluckvolumina oder der Arbeitstaktung erfolgen kann. Der mittlere Flüssigkeitsspiegel im Mitteldruckspeicher (2) kann über eine Zusatzpumpe eingestellt werden, indem aus dem Niederdruck-Druckteil (3) (oder einem Reservetank) Flüssigkeit in das System gepumpt oder aus diesem abgelassen wird.

Im Folgenden wird näher erläutert, auf welche Weise bzw. in welcher Art die Eintauchtiefe bevorzugt gesteuert bzw. geregelt werden kann.

Gemäß obiger Beschreibung sind die primärseitigen und sekundärseitigen Maschinen zunächst nur über die gemeinsamen Speicher gekoppelt, und es Wurde lediglich eine Anpassung der Grenzkräfte über die Druckniveaus vorgesehen. Somit waren lediglich zwei einstellbare, dann aber je konstante Kraftniveaus möglich. Eine Veränderung der Eintauchtiefe des/der Schwimmkörper erfolgt jedoch bevorzugt bei kontinuierlicher Veränderung der Kraft. Da sich gezeigt hat, dass eine stellbare Drossel (Drosselelement) aufgrund der damit einhergehenden Verluste nicht verwendet werden soll, wird eine ergänzende Schaltung vorgesehen.

Wie zuvor erwähnt, wird im Bereich der Totpunkte des Arbeitszyklus jeder aktiven primärseitigen Komponente (4, 5, 6, 7, 8, 9) eine entsprechende sekundärseitige Komponente (10, 11, 12, 13, 14) zugeordnet. Hierdurch kann die jeweilige Sekundäreinheit mit veränderlichen Druckdifferenzen fahren. Dies liefert den (energetischen) Vorteil, dass im Gegensatz zur prohibitiven Drossel der Druckabfall über der Sekundäreinheit unmittelbar zur Auskopplung von Wellenleistung an den Generator führt. Auf diese Weise kann ein besonders effizienter Abtriebsstrang bzw. ein besonders effizientes Energiewandlungsverfahren bereitgestellt werden.

Ein aktives Eintauchen kann ausgelöst werden, indem die betreffende primärseitige Maschine gegen Ende des Rückzugs nicht mehr aus dem Mitteldruckspeicher (2), sondern unmittelbar über den Niederdruckausgang der zugeordneten Sekundärmaschine gespeist wird. Dies wird durch Schließen des Ventils (14) erreicht. Die Sekundärmaschine (10, 10a) und die Primärmaschine (4, 4a) befinden sich dann in einer Serien- bzw. Reihenschaltung zwischen Hochdruck- und Niederdruckschiene, wobei zu Beginn der Umschaltung der Druck zwischen beiden Maschinen noch dem Druck der Mitteldruckschiene "p_mittel" entspricht. Dabei ist sicherzustellen, dass die Auslösung des Eintauchvorgangs zu einem Zeitpunkt erfolgt, bei dem der Volumenstrom durch die Primärmaschine noch größer oder gleich dem Volumenstrom durch die Sekundärmaschine ist. Da das Wellental naht, fällt der Volumenstrom durch die Primärmaschine ab. Da zugleich die Sekundärmaschine einen weitgehend konstanten Volumenstrom anliefert, führt dies zu einem Anstieg des Drucks in der Koppelleitung zwischen den Maschinen (Ventil (7) zur Mitteldruckschiene schließt, Rückschlagventil (8) öffnet) bei gleichzeitiger Vergrößerung der Eintauchtiefe. Ein zusätzlicher Druckpuffer (5) (insbesondere kleiner Speicher, der als Druckfeder ausgelegt ist) nimmt bei zunehmendem Druck ebenfalls Flüssigkeit auf. Seine Federwirkung, die gegebenenfalls über schaltbare Gasvolumina oder anderweitig einstellbar ist, beeinflusst die Geschwindigkeit des Eintauchvorgangs.

Der Eintauchvorgang führt also zu einer kontinuierlichen Zunahme des Eingangsdrucks der Primärmaschine bei gleichzeitig abfallender Druckdifferenz über der Sekundärmaschine (10, 10a). Am Ende des Eintauchvorgangs liegt der volle Druck "p_hoch" an der Primärmaschine an, während die Sekundärmaschine keinen Druckabfall mehr erzeugt und somit automatisch in den Freilauf schaltet, wobei Ventil (11) öffnet.

Eine gesteuerte/geregelte Austauchung im Bereich des Totpunktes OT kann ähnlich realisiert werden. Zunächst ist der Schwimmkörper bevorzugt maximal eingetaucht (Kraft F_max). Entsprechend liegt der Druck "p_hoch" auf der Hochdruckseite der Primärmaschine an. Zum Austauchen wird der Ausgang der Primärmaschine nun auf die Hochdruckseite der zugeordneten Sekundärmaschine gelegt (Ventil (13) wird geöffnet), die in dieser Steuerungsphase nicht mehr aus der Hochdruckschiene gespeist werden soll (Ventil (12) geschlossen). Die Primärmaschine pumpt in dieser Phase unmittelbar in den Hochdruck-Eingang der zugeordneten Sekundärmaschine. Mit abfallender Geschwindigkeit des Auszugs lässt der Volumenstrom der Primärmaschine nach. Ein weiterer weitgehend konstanter Volumenstrom durch die zugeordnete Sekundärmaschine wird in Summe durch die Primärmaschine und das Entladen des Druckpuffers (5) geliefert. Dies führt zu einem Austauchen des Schwimmkörpers bei entsprechendem Druckabfall. Die beim Austauchen frei werdende mechanische Arbeit kann hierbei mit geringen Verlusten auf besonders effiziente Weise über die zugeordnete Sekundärmaschine an den Generator abgegeben werden. Somit lässt sich eine hohe Energieausbeute realisieren, insbesondere bei einfachem Aufbau der gesamten Anordnung, speziell auch mit Standard-Komponenten.

Im Folgenden wird ein bevorzugtes Schaltschema aktiver Ventile im Betriebszyklus beschrieben.

Die Anlagensteuerung erfolgt über die Stellung der sekundärseitigen aktiven Ventile 12, 13, und 14. In untenstehender Tabelle beziehen sich "Leerlauf' und "Last" auf den Zustand der Sekundäreinheit. Diese Ventile sind, außer in den Totpunkten, frei schaltbar.

| Betrieb: | Leerlauf | Last | Eintauchen (UT) | Austauchen (OT) |
|---|---|---|---|---|
| V12 | geschlossen | offen | offen | geschlossen |
| V13 | geschlossen | egal | egal | offen |
| V14 | offen | offen | geschlossen | offen |
| p_PAM | nicht definiert | nicht definiert | steigt | sinkt |

| | |
|---|---|
| V12, V13, V14 | Ventile gemäß Figur 6 |
| p_PAM | Druck primärseitige Arbeitsmaschine |

Im Folgenden wird eine bevorzugte Konfiguration bzw. Anordnung eines Speichers beschrieben.

Bei der zuvor beschriebenen Anordnung stellt der Mitteldruckspeicher (2) die Energiereserve für den Rückzug zur Verfügung. Dieser ist entsprechend groß zu konfigurieren, so dass der sichere Betrieb der Anlage auch im ungünstigsten Fall gewährleistet ist. Hierzu wird bevorzugt ein verhältnismäßig großes Volumen vorgesehen, insbesondere da hierdurch das volle Schluckvolumen für den gleichzeitigen Rücklauf aller Schwimmkörper einer Installation gleichzeitig bereitgestellt werden kann. Ein relativ starker Druckabfall im ungünstigsten Fall ist jedoch zulässig, sofern dieser Fall keine zerstörerischen Kräfte (z.B. durch schlagende Seile) freisetzt.

Das aktive Eintauchen im Bereich der Wellentäler erfordert eine entsprechende Reserve des Hochdruckspeichers. Sollte der Speicherinhalt in einzelnen Fällen nicht ausreichen, führt dies jedoch nicht zum Ausfall der Anlage. Lediglich können die Vorteile der Vorspannung im Bereich des Totpunktes UT nicht genutzt werden. Tritt dieser Fall selten ein, kann dies hingenommen werden.

Eine Glättung der Leistungsabgabe an das Stromnetz kann ebenfalls durch den Hochdruckspeicher sichergestellt werden, da dieser die im Seegang stochastische Leistungsabgabe der bewegten Schwimmkörper glätten kann. Es hat sich jedoch gezeigt, dass die für eine vollständig kontinuierliche Leistungsabgabe erforderliche Speichergröße einen entsprechend großen Aufwand verursachen würde und einer wirtschaftlichen Optimierung entgegenstehen würde, so dass die Speichergröße bevorzugt eine maximale Größe kleiner der für eine vollständig kontinuierliche Leistungsabgabe erforderlichen Speichergröße aufweist.

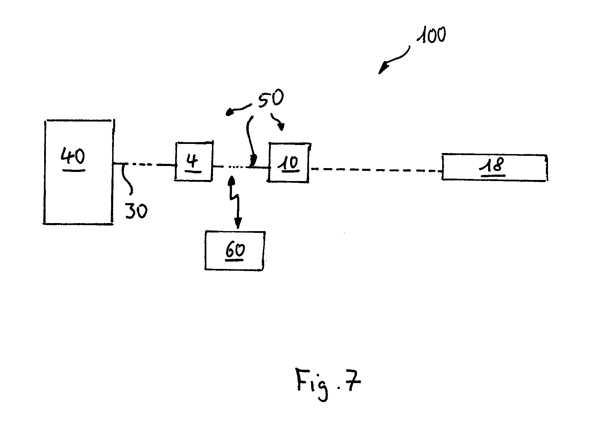

In der Figur 7 sind Komponenten einer Abtriebsanlage 100 gezeigt, insbesondere der Abtriebsstrang 50 mit der primärseitigen Arbeitsmaschine 4 und der sekundärseitigen Arbeitsmaschine 10, welche mit einem Generator 18 verbunden ist. Ein Körper 40, insbesondere Schwimmkörper, ist über Zugmittel 30 an die primärseitigen Arbeitsmaschine 4 gekuppelt, insbesondere derart, dass eine Bewegung bzw. ein Hub des Körpers 40 direkt/unmittelbar auch einen Hub der primärseitigen Arbeitsmaschine 4 hervorruft.

Bezugszeichenliste

| | |
|---|---|
| 1 | Hochdruckspeicher bzw. p_hoch-Speicher (klein) |
| 2 | Mitteldruckspeicher bzw. p_mittel-Speicher (groß) |
| 3 | optional: Niederdruckspeicher bzw. p_min-Speicher, wahlweise mit Ausgleichspumpe (entfällt gegebenenfalls bei Zylinder) |
| 4, 4a | Hydraulische Primäreinheit für (ersten) Auftriebskörper A |
| 5 | Druckpuffer, insbesondere zum Vorgeben einer Eintauch-/Austauch-Geschwindigkeit, insbesondere eingerichtet, eine Federwirkung bereitzustellen; |
| 6 | Rückschlagventil, öffnet im Pumpbetrieb; insbesondere zur Sicherheit gegen Fehlschaltung des Austauchventils 13 |
| 7 | Rückschlagventil, öffnet bei Minimalkraft-Rückzug |
| 8 | Rückschlagventil, öffnet beim Eintauchen (Druckanstieg um UT) |
| 9 | Rückschlagventil, öffnet im Pumpbetrieb in gemeinsame p_hoch-Schiene (gegebenenfalls auch parallel zu |

Rückschlagventil 6 geschaltet)

| | |
|---|---|
| 10, 10a | Hydraulische Sekundäreinheit für (ersten) Auftriebskörper A, insbesondere Motor, der bei Ein-/Austauchen dem entsprechenden Auftriebskörper zugeordnet ist |
| 11 | hydraulischer Freilauf bzw. Freilaufventil |
| 12 | Lastventil für Sekundäreinheit 10, insbesondere frei schaltbar, außer bei OT (geschlossen) und UT (offen) des zugeordneten Auftriebskörpers |
| 13 | Austauchventil des zugeordneten Auftriebskörpers |
| 14 | Eintauchventil des zugeordneten Auftriebskörpers |
| 15 | Drossel (kleine Durchflussmenge), insbesondere zum Verhindern von Druckentkopplung bei gleichzeitig geschlossenen Ventilen (13, 14, 15); wahlweise Ersatz durch Druckbegrenzungsventil; |
| 16 | kleine Sekundäreinheit/Motoreinheit, insbesondere zur Verlustkompensation, insbesondere Dauervolllast |
| 17 | Ölvorrat bzw. Leckstromsystem bzw. Ablauf |
| 18 | Generator |
| 19 | Hochdruckniveau (p_hoch) |
| 20 | Mitteldruckniveau (p_mittel) |
| 21 | Niederdruckniveau (p_min) |
| 22 | variables Druckniveau (p_variable) zwischen Hochdruckniveau und Mitteldruckniveau |
| 23 | Primärseite (erster) Auftriebskörper/Schwimmkörper A |
| 24 | Primärseite (weiterer) Auftriebskörper/Schwimmkörper B |
| 25 | Sekundärseite (erster) Auftriebskörper/Schwimmkörper A |
| 26 | Sekundärseite (weiterer) Auftriebskörper/Schwimmkörper B |
| | |
| 30 | Zugmittel |
| 40 | Körper, insbesondere Schwimmkörper |
| 50 | hydraulischer Abtriebsstrang |
| 60 | Steuerungsvorrichtung |
| 100 | hydraulische Abtriebsanlage |
| | |
| A | (erster) Auftriebskörper/Schwimmkörper |
| B | (zweiter) Auftriebskörper/Schwimmkörper |
| F | Kraft |
| F_aus | Auszugskraft |
| F_rück | Rückzugskraft |
| G | Grenzpfad |
| OT | oberer Totpunkt |
| UT | unterer Totpunkt |
| v | Geschwindigkeit |
| VP1 | erster Verzweigungspunkt |
| VP2 | zweiter Verzweigungspunkt |
| VP_grenz | Verzweigungspunkt bei Grenzgeschwindigkeit |
| AP1, AP2, AP3, APn | Beschleunigungsumkehrpunkt |
| t1 | Auszug |
| t2 | Austauchen |
| t3 | Rückzug |
| t4 | Eintauchen |

## Patentansprüche

1. Hydraulischer Abtriebsstrang (50) zur Konversion von mechanischer Energie in elektrische Energie, umfassend eine primärseitige hydraulische Arbeitsmaschine (4, 4a) zur Wandlung der mechanischen Energie in hydraulische Energie, und eine sekundärseitige hydraulische Arbeitsmaschine (10, 10a) zur Wandlung der hydraulischen Energie in mechanische Nutzenergie;
**dadurch gekennzeichnet, dass** der Abtriebsstrang (50) eingerichtet ist, bei einem Druckübergang zwischen wenigstens zwei Druckniveaus hydraulische Energie zu nutzen, indem die sekundärseitige Arbeitsmaschine (10, 10a) zur Aufnahme von beim Druckübergang, insbesondere bei einem Drucktransitions-Teilhub, frei werdender hydraulischer Energie im Abtriebsstrang (50) verkuppelt ist, insbesondere in Serie mit der primärseitigen Arbeitsmaschine (4, 4a).

**2.** Abtriebsstrang nach Anspruch 1, wobei der Abtriebsstrang (50) eingerichtet ist zur drossellosen Absenkung eines Arbeitsdrucks in der primärseitigen Arbeitsmaschine (4, 4a) längs eines jeweiligen Druckabsenkungs-Teilhubs, wobei eine Hochdruckseite der primärseitigen Arbeitsmaschine (4, 4a) von einem Hochdruckspeicher (1) abkoppelbar ist und auf eine Hochdruckseite der sekundärseitigen Arbeitsmaschine (10, 10a) schaltbar ist, wobei die sekundärseitige Arbeitsmaschine (10, 10a) eingerichtet ist, eine längs des Druckabsenkungs-Teilhubs jeweils verbleibende Druckdifferenz als mechanische Nutzenergie auszukoppeln.

**3.** Abtriebsstrang nach Anspruch 1, wobei der Abtriebsstrang (50) eingerichtet ist zur drossellosen Anhebung des Arbeitsdrucks in der primärseitigen Arbeitsmaschine (4, 4a) längs eines Druckanhebungs-Teilhubs, wobei eine Niederdruckseite der sekundärseitigen Arbeitsmaschine (10, 10a) von einem Niederdruckniveau bzw. einem Mitteldruckniveau des Abtriebsstrangs abkoppelbar ist und auf eine Hochdruckseite der primärseitigen Arbeitsmaschine (4, 4a) schaltbar ist, wobei die sekundärseitige Arbeitsmaschine (10, 10a) eingerichtet ist, eine längs des Druckanhebungs-Teilhubs jeweils verbleibende Druckdifferenz als mechanische Nutzenergie auszukoppeln.

**4.** Abtriebsstrang nach einem der vorhergehenden Ansprüche, wobei die sekundärseitige Arbeitsmaschine (10, 10a) als Motor ausgebildet ist, insbesondere als schnelllaufender Schrägscheiben- oder Schrägachsenmotor, und/oder wobei die primärseitige Arbeitsmaschine (4, 4a) als Zylinder oder rotatorische Hydraulikmaschine ausgebildet ist.

**5.** Abtriebsstrang nach einem der vorhergehenden Ansprüche, wobei der Abtriebsstrang (50) wenigstens einen zwischen der primärseitigen Arbeitsmaschine (4, 4a) und der sekundärseitigen Arbeitsmaschine (10, 10a) angeordneten Druckpuffer (5) aufweist, insbesondere in Form eines feder- oder gasdruckbelasteten Hydraulikspeichers, mittels welchem ein Druckanstieg und/oder Druckabfall während eines jeweiligen Drucktransitions-Teilhubs einstellbar ist.

**6.** Hydraulische Abtriebsanlage (100) zur Konversion von mechanischer Energie in elektrische Energie, insbesondere zur Konversion von in aufeinanderfolgenden Arbeitszyklen durch eine auf einen oszillierenden Arbeitshub abbildbare, reziproke Bewegungsbahn eines Körpers (40) beispielsweise aus Meereswellen geernteter Energie, mit:

    - wenigstens einem Abtriebsstrang (50) mit wenigstens einer primärseitigen hydraulischen Arbeitsmaschine (4, 4a) und wenigstens einer an wenigstens einen Generator (18) koppelbaren sekundärseitigen hydraulischen Arbeitsmaschine (10, 10a), insbesondere wenigstens einem Abtriebsstrang (50) nach einem der Ansprüche 1 bis 5;
    - einer Steuerungsvorrichtung (60) zum Ansteuern der Arbeitsmaschinen (4, 10) und/oder Ventilen (6, 7, 8, 9, 11, 12, 13, 14) der Abtriebsanlage;
    **dadurch gekennzeichnet, dass** wenigstens eine der primärseitigen Arbeitsmaschinen (4, 4a) derart mittels der Steuerungsvorrichtung (60) ansteuerbar ist, dass in einem jeweiligen Drucktransitions-Teilhub bei einem Druckübergang zwischen wenigstens zwei Druckniveaus frei werdende hydraulische Energie durch Auskopplung mittels der sekundärseitigen Arbeitsmaschine (10, 10a) für die Energiekonversion nutzbar ist.

**7.** Abtriebsanlage nach Anspruch 6, wobei die Abtriebsanlage (100) wenigstens ein Ventil (7, 8, 13, 14) zum Einstellen von Umkehrpunkten, insbesondere Totpunkten einer die mechanische Energie liefernden auf einen oszillierenden Arbeitshub abbildbaren, reziproken Bewegungsbahn eines/des Körpers (40) aufweist, und/oder wobei die Abtriebsanlage (100) wenigstens zwei Speicher (1, 2, 3) zum Einstellen des Drucks des jeweiligen Druckniveaus umfasst.

**8.** Abtriebsanlage nach Anspruch 6 oder 7, wobei die Abtriebsanlage (100) eine Vielzahl von sekundärseitigen Arbeitsmaschinen (10, 10a) umfasst, welche jeweils einen hydraulischen Freilauf (11) aufweisen, wobei die jeweilige Arbeitsmaschine (10, 10a) jeweils über ein Lastventil (12) zu- und/oder abschaltbar ist, und bevorzugt über wenigstens ein weiteres Ventil zumindest zeitweise in Serie mit einer jeweiligen primärseitigen Arbeitsmaschine anordenbar ist.

**9.** Steuerungsvorrichtung (60) zum Steuern und/oder Regeln einer hydraulischen Abtriebsanlage (100), insbesondere zum Steuern und/oder Regeln eines Abtriebsstrangs (50) eines Wellenenergiekonverters auf wenigstens zwei Druckniveaus, **dadurch gekennzeichnet, dass** die Steuerungsvorrichtung (60) eingerichtet ist, wenigstens eine Arbeitsmaschine (4, 4a, 10, 10a) und/oder wenigstens ein Ventil (6, 7, 8, 9, 11, 12, 13, 14) der hydraulischen Abtriebsanlage derart anzusteuern, dass bei Drucktransitions-Teilhüben, insbesondere zwischen Totpunkten einer auf einen oszillierenden Arbeitshub abbildbaren, reziproken Bewegungsbahn eines Körpers (40), beim Druckübergang frei werdende hydraulische Energie von der wenigstens einen Arbeitsmaschine (4, 4a, 10, 10a) aufgenommen wird.

**10.** Verfahren zum Steuern und/oder Regeln eines hydraulischen Abtriebsstrangs (50), welcher zur Konversion von einer auf einen oszillierenden Arbeitshub abbildbaren, reziproken Bewegungsbahn eines Körpers (40) erzeugter mechanischer Energie, insbesondere von Wellenenergie, in elektrische Energie eingerichtet ist, umfassend die Schritte:

- Ansteuern wenigstens einer primärseitigen Arbeitsmaschine (4, 4a) des Abtriebsstrangs (50), insbesondere in Abhängigkeit der Bewegung des Körpers (40);
- Ansteuern wenigstens einer sekundärseitigen Arbeitsmaschine (10, 10a) und/oder wenigstens eines sekundärseitigen Ventils (12, 13, 14) des Abtriebsstrangs (50) zum Einleiten/Durchführen von Drucktransitions-Teilhüben, insbesondere in Abhängigkeit der Bewegung des Körpers (40); und
- Ansteuern wenigstens einer der Arbeitsmaschinen (4, 4a, 10, 10a) zum Ernten von bei einem Druckübergang, insbesondere beim jeweiligen Drucktransitions-Teilhub, frei werdender hydraulischer Energie mittels wenigstens einer der Arbeitsmaschinen (4, 4a, 10, 10a).

11. Verfahren nach Anspruch 10, wobei eine primärseitige Arbeitsmaschine (4, 4a) in einem Energie erzeugenden Arbeitshub auf wenigstens einem ersten Überdruckniveau als Pumpe eingesetzt wird und in einem Rückzugshub von wenigstens einem zweiten Überdruckniveau gespeist wird, wobei bevorzugt wenigstens eine sekundärseitige Arbeitsmaschine (10, 10a) zwischen dem ersten und zweiten Überdruckniveau als Motor eingesetzt wird.

12. Verfahren nach Anspruch 10 oder 11, wobei im Bereich eines ersten Umkehrpunktes, insbesondere eines oberen Totpunkts (OT), der Bewegung des Körpers (40), insbesondere im Bereich eines Wellenkamms, ein Druckabsenkungs-Teilhub einer/der mit dem Körper verbundenen primärseitigen Arbeitsmaschine (4, 4a) ausgeführt wird, und/oder wobei im Bereich eines zweiten Umkehrpunktes, insbesondere eines unteren Totpunkts (UT), der Bewegung des Körpers, insbesondere im Bereich eines Wellentals, ein Druckanhebungs-Teilhub einer/der mit dem Körper (40) verbundenen primärseitigen Arbeitsmaschine (4, 4a) ausgeführt wird.

13. Energiekonversionsverfahren zum Konvertieren von mechanischer Energie, insbesondere von in aufeinanderfolgenden Arbeitszyklen einer auf einen oszillierenden Arbeitshub abbildbaren, reziproken Bewegungsbahn geernteter Energie, in elektrische Energie mittels eines hydraulischen Abtriebsstrangs (50), insbesondere mittels eines hydraulischen Abtriebsstrangs (50) nach einem der Ansprüche 1 bis 5 und/oder basierend auf einem Verfahren nach einem der vorhergehenden Verfahrensansprüche, **dadurch gekennzeichnet, dass** wenigstens eine hydraulische Arbeitsmaschine (4, 4a, 10, 10a) des hydraulischen Abtriebsstrangs derart betrieben wird, dass bei Druckübergang zwischen wenigstens zwei Druckniveaus frei werdende hydraulische Energie von der wenigstens einen Arbeitsmaschine (4, 4a, 10, 10a) für die Energiekonversion genutzt wird zur Auskopplung der hydraulischen Energie mittels der wenigstens einen Arbeitsmaschine (10, 10a).

14. Verwendung einer Arbeitsmaschine (4, 4a, 10, 10a) in einem hydraulischen Abtriebsstrang (50) zur Konversion mechanischer Energie in elektrische Energie durch Aufnahme/Ernten von in einem Drucktransitions-Teilhub frei werdender hydraulischer Energie mittels der Arbeitsmaschine (4, 4a, 10, 10a).

15. Verwendung wenigstens einer sekundärseitigen Arbeitsmaschine (10, 10a) einer hydraulischen Abtriebsanlage mit wenigstens zwei Druckniveaus zur Aufnahme von bei drosselfreiem bzw. ohne Drosselung erfolgendem Schalten zwischen den Druckniveaus, insbesondere bei einem Drucktransitions-Teilhub, frei werdender hydraulischer Energie und zur Konversion der Energie in elektrische Energie, wobei die sekundärseitige Arbeitsmaschine (10, 10a) jeweils einer primärseitigen Arbeitsmaschine (4, 4a) zugeordnet wird.

Figur 1

Figur 2

Figur 3

Figur 4

EP 2 868 949 A1

Figur 5

Fig. 6

EP 2 868 949 A1

Fig. 7

Europäisches
Patentamt

European
Patent Office

Office européen
des brevets

**EUROPÄISCHER RECHERCHENBERICHT**

Nummer der Anmeldung

EP 14 00 3152

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 016592 A1 (BOSCH GMBH ROBERT [DE]) 11. Oktober 2012 (2012-10-11) * das ganze Dokument * ----- | 1-15 | INV. F16H61/4096 F03B13/14 F16H61/44 |
| A,D | RICO H HANSEN ET AL: "Analysis of discrete pressure level systems for Wave Energy Converters", FLUID POWER AND MECHATRONICS (FPM), 2011 INTERNATIONAL CONFERENCE ON, IEEE, 17. August 2011 (2011-08-17), Seiten 552-558, XP032459187, DOI: 10.1109/FPM.2011.6045825 ISBN: 978-1-4244-8451-5 * das ganze Dokument * ----- | 1-15 | |

RECHERCHIERTE
SACHGEBIETE (IPC)

F16H
F03B
F03D

Der vorliegende Recherchenbericht wurde für alle Patentansprüche erstellt

| Recherchenort | Abschlußdatum der Recherche | Prüfer |
|---|---|---|
| München | 25. März 2015 | Meritano, Luciano |

EP 2 868 949 A1

**ANHANG ZUM EUROPÄISCHEN RECHERCHENBERICHT**
**ÜBER DIE EUROPÄISCHE PATENTANMELDUNG NR.**
EP 14 00 3152

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-03-2015

| Im Recherchenbericht angeführtes Patentdokument | Datum der Veröffentlichung | Mitglied(er) der Patentfamilie | Datum der Veröffentlichung |
|---|---|---|---|
| DE 102011016592 A1 | 11-10-2012 | AU 2012239050 A1 | 28-11-2013 |
| | | DE 102011016592 A1 | 11-10-2012 |
| | | EP 2694803 A1 | 12-02-2014 |
| | | JP 2014515075 A | 26-06-2014 |
| | | US 2014138958 A1 | 22-05-2014 |
| | | WO 2012136359 A1 | 11-10-2012 |

EPO FORM P0461

Für nähere Einzelheiten zu diesem Anhang : siehe Amtsblatt des Europäischen Patentamts, Nr.12/82

28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

• Analysis of Discrete Pressure Level Systems for Wave Energy Converters. **R.H. HANSEN ; T.O. ANDERSEN ; H.C. PERDERSEN.** Fluid Power and Mechatronics (FPM)'', 2011 International Conference. IEEE, 2011, 552-558